# EUROPEAN PATENT APPLICATION

(11) **EP 1 320 028 A1**
(43) Date of publication of application: **18.06.2003**
(21) Application number: 01932303.9
(22) Date of filing: 28.05.2001
(51) Int. Cl.: G06F 9/06, G06F 9/44

(54) **PROCESSING METHOD USING SYNCHRONIZATION STRUCTURE OF INFORMATION PROCESSOR**

(30) Priority: 30.05.2000 JP 2000160887
(71) Applicant: The Institute of Computer Based Software Methodology and Technology, Minatu-ku, Tokyo 108-0074 (JP); Information System Development Institute, Tokyo 108-0074 (JP)
(72) Inventor: NEGORO, Fumio, Kamakura-shi, Kanagawa 248-0001 (JP)
(74) Representative: Blatchford, William Michael
(86) International application number: JP0104466
(87) International publication number: WO01093026

(57) **Abstract**

A processing method is provided in which development of a program is processed using an information processor by being applied to a synchronous structure including two or more synchronous vectors developed on a memory area of the information processor. First, the synchronous structure acquires a defined input through an external interface, references a content of a word constituting the defined input, and thereafter establishes a signification to a predetermined word to output the word to a defined output.

## Description

### Technical Field

The present invention relates to a technique which is effective in being applied to development of a computer program in every field.

### Background Art

The present applicant (inventor) proposed a program development theory (govermentaL methodologY for softwarE provincE: LYEE) based on a conceptual division method which is different from the conventional art, and has patent applications filed prior to this application. In a process of applying the theory to actual program development, the present applicant has recently paid attention to a synchronous structure.

That is, technical effects obtained with LYEE conceivably include a large contribution of the synchronous structure. Such a synchronous structure, however, has never been sufficiently disclosed.

That is, it has been demanded that such a synchronous structure be proposed in a definite manner in order to eliminate errors caused by a person from a computer program and to render the program itself have a simple and precise structure.

In view of the above problem, the present invention has been made by the present inventor, and its object is to clarify a technique for embodying a basic idea of LYEE from the viewpoint of the synchronous structure and to provide a technique for developing a program which is easy to be developed and capable of realizing a robust system upon being executed.

### Disclosure of the Invention

According to the present invention, in a processing method in which development of a program is processed using an information processor by being applied to a synchronous structure including two or more synchronous vectors developed on a memory area of the information processor, the synchronous structure first acquires a defined input through an external interface, references a content of a word constituting the defined input, and thereafter establishes a signification to a predetermined word to output the word to the defined output.

Here, the defined input and the defined output are access units when the information processor inputs data from a physical storage medium or outputs data into the physical storage medium.

Also, the signification is a state in which some value exists in a predetermined data area set in the memory area, and the word is a unit data for acknowledging a presence of the signification.

Further, in the synchronous structure, the signification of the word is established by satisfying a logical definition which causes a value to exist in a predetermined variable and an acceptance condition which judges whether an existing value that is a result of executing the logical definition is accepted or not.

### Brief Description of the Drawings

Fig. 1 is a drawing for showing a base structure of a synchronous structure;
Fig. 2 is a drawing (1) for explaining a unit;
Fig. 3 is a drawing (2) for explaining a unit;
Fig. 4 is a drawing for explaining an arrangement of synchronous vectors;
Fig. 5 is a drawing (1) for explaining a state in which pallets are sequentially executed;
Fig. 6 is a drawing (2) for explaining a state in which pallets are sequentially executed;
Fig. 7 is a drawing (3) for explaining a state in which pallets are sequentially executed;
Fig. 8 is a flowchart (1) for explaining a routing action vector;
Fig. 9 is a flowchart (2) for explaining a routing action vector;
Fig. 10 is a flowchart (3) for explaining a routing action vector;
Fig. 11 is a flowchart (1) for explaining a process of a duplication vector;
Fig. 12 is a flowchart (2) for explaining a process of a duplication vector;
Fig. 13 is a flowchart (3) for explaining a process of a duplication vector;
Fig. 14 is a flowchart (1) for explaining a process of a signification vector;
Fig. 15 is a flowchart (2) for explaining a process of a signification vector;
Fig. 16 is a flowchart (3) for explaining a process of a signification vector;
Fig. 17 is a flowchart (4) for explaining a process of a signification vector;
Fig. 18 is a flowchart (5) for explaining a process of a signification vector;
Fig. 19 is a flowchart (1) for explaining a process of a structural action vector;
Fig. 20 is a flowchart (2) for explaining a process of a structural action vector;
Fig. 21 is a flowchart for explaining a process of a basic processing scheme of an input synchronous vector;
Fig. 22 is a table (1) for explaining a synchronous vector of a defined input;
Fig. 23 is a table (1) showing a content of a box for a process;
Fig. 24 is a table (2) for explaining a synchronous vector of a defined input;
Fig. 25 is a table (2) showing a content of a box for a process;
Fig. 26 is a drawing for showing an overall movement of a base structure;
Fig. 27 is a drawing (1) for showing a relationship of a self word and a given word;
Fig. 28 is a drawing (2) for showing a relationship of a self word and a given word;
Fig. 29 is a table for showing a logical definition and an acceptance condition of a signification vector;
Fig. 30 is a drawing (1) for explaining a state of a signification vector during execution;
Fig. 31 is a table (1) for showing a logical definition and an acceptance condition during execution;
Fig. 32 is a drawing (2) for explaining a state of a signification vector during execution;
Fig. 33 is a table (2) for showing a logical definition and an acceptance condition during execution;
Fig. 34 is a drawing (3) for explaining a state of a signification vector during execution;
Fig. 35 is a table (3) for showing a logical definition and an acceptance condition during execution;
Fig. 36 is a drawing (4) for explaining a state of a signification vector during execution;
Fig. 37 is a table (4) for showing a logical definition and an acceptance condition during execution;
Fig. 38 is a drawing (5) for explaining a state of a signification vector during execution;
Fig. 39 is a table (5) for showing a logical definition and an acceptance condition during execution;
Fig. 40 is a drawing (1) for showing a relationship in arrangement of synchronous vectors;
Fig. 41 is a drawing (2) for showing a relationship in arrangement of synchronous vectors;
Fig. 42 is a drawing (3) for showing a relationship in arrangement of synchronous vectors;
Fig. 43 is a drawing (4) for showing a relationship in arrangement of synchronous vectors;
Fig. 44 is a drawing (1) for showing an example of a process route diagram;
Fig. 45 is a drawing (2) for showing an example of a process route diagram;
Fig. 46 is a drawing (3) for showing an example of a process route diagram;
Fig. 47 is a drawing (4) for showing an example of a process route diagram;
Fig. 48 is a drawing (5) for showing an example of a process route diagram;
Fig. 49 is a drawing (6) for showing an example of a process route diagram;
Fig. 50 is a drawing (7) for showing an example of a process route diagram;
Fig. 51 is a drawing (8) for showing an example of a process route diagram;
Fig. 52 is a drawing (9) for showing an example of a process route diagram;
Fig. 53 is a drawing (10) for showing an example of a process route diagram;
Fig. 54 is a drawing (11) for showing an example of a process route diagram;
Fig. 55 is a drawing (12) for showing an example of a process route diagram;
Fig. 56 is a drawing (13) for showing an example of a process route diagram;
Fig. 57 is a drawing (14) for showing an example of a process route diagram; and
Fig. 58 is a drawing (15) for showing an example of a process route diagram.

### Best Mode for carrying out the Invention

Hereinafter, an embodiment of the present invention will be described with reference to the accompanying drawings.

### "Base Structure of Synchronous Structure"

The basic role of an information process implemented on a computer is as follows: In order to output an aimed defined output, first to enter a defined input, and by referring to the content of the defined input word, to establish a signification to the defined output word, then to output the aimed defined output. A control structure that performs such a fundamental role is herein defined as a general model which is applicable to whatever defined the aimed defined output may be.

Here, a tense control function (a program to execute three kinds of pallets individually in a computer) is provided and three kinds of objects which execute synchronous vectors are called pallets.

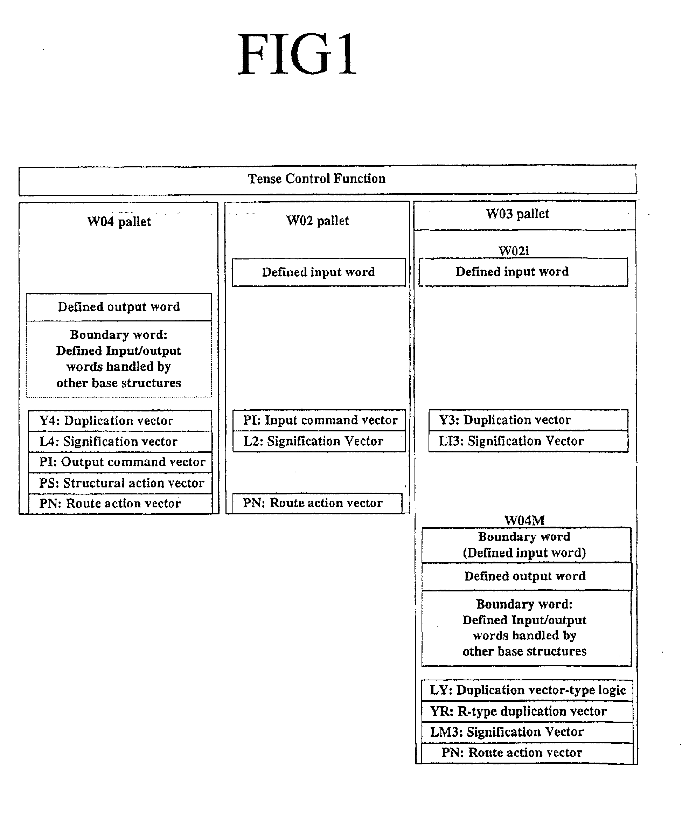

Here, there are provided programs (W02 pallet; W03 pallet: with substructures called W02i and W04M; and W04 pallet). Inside each pallet, a defined input word data area, a defined output word data area and a boundary word data area are placed together with synchronous vectors as shown in Fig. 1. The whole structure made up in this way is called a base structure.

Note that the data area is set within a memory or hard disk drive of a computer.

Next, in order to explain the synchronous structure of the present invention, important items referred to as "structural principles" will be described together with explanations of terms used in this embodiment.

### (Structural Principle 1)

In Structural Principle 1, a unit of signification is treated as a "word".

(Emptiness): A state having no value. For example, it means that when a data area was defined in a computer memory, no data value exits in the relevant data area.

Here, when the "empty" is handled in a computer, a statement method needs to be changed depending on program development languages to be used. For example, the statement in COBOL is "Low-Value", the statement in Visual-Basic is "Null", and in C, it is indicated that a data length is zero.

(Signification): A state in which some value exists, compared to a state in which no value exists. For example, when a data area is defined in the computer memory, some value exists in the relevant data area and it is not a state of the emptiness.

(Word): A unit whose state enables to acknowledge the presence of the signification is defined as a "word". As long as the unit enables to acknowledge the presence of the signification, any can be defined as the word. For example, in case of a screen, the screen data area to which a person enters data or the area to which a computer displays data can be defined as the word, and by assigning an identifier to each area unit, it is made into a word identifier. Also, in case of a database, a file, communication media, etc., the data item within a record format established by every data access unit can be defined as the word, and by assigning an identifier to each data item unit, it is made into a word identifier. Further, when input/output on a computer is handled simply by electrical signals, each of different signals can be defined as the word, an identifier is assigned respectively and it is made into a word identifier.

(Signification of Word): A state in which some value exists on the data area in the computer memory, to which a word identifier was attached.

### (Structural Principle 2)

In Structural Principle 2, the "word signification" is established when both the relevant word's logical definition and the acceptance condition are satisfied. This means that whether both the relevant word's logical definition and the acceptance condition are satisfied or not is judged by whether the word signification is established or not.

(Logical Definition): An expression to bring out a signification to a word. As a result of executing logical definition (executing an expression to bring out a signification to a word), a signification of a word comes to exist. For example, supposing that treating a word to bring out a signification as A and words to be referenced in order to bring out a signification to A as B and C, the following expressions are called logical definition:
A = B + C, where a result of (B + C) is substituted for A, or A = B, where the value of B is simply substituted for A.

As a result of executing logical definition (A = B + C), if no values exist in B and C, no value is substituted for A even if logical definition (A = B + C) has been executed.

On the other hand, if some values exist in B and C, a value is substituted for A, and a signification comes to exist.

It is expressed as "the logical definition has been satisfied" that a state in which a signification has come to exist in A.

(Self Word): When the logical definition exists for all words handled by the base structure and one piece of the logical definition was selected, a self word, in this instance, is an object word which brings out a value, viewed from the logical definition.

For example, when (A = B + C) is used as the logical definition, an object to bring out a value is A and A is a self word.

(Given Word): A word referenced in logical definition of a self word.

For example, when (A = B + C) is used as logical definition, words to be referenced are B and C, and B and C are given words.

(Acceptance Condition): A condition to accept a result of executing logical definition.

For example, with logical definition (A=B+C), if the condition comprised of word D and word E is set as (D < E), the (D < E) is an acceptance condition.

(Validity): A state in which the acceptance condition was satisfied.

For example, with an acceptance condition being (D < E), if it is satisfied, then it is Validity.

(Unit): A set comprised of a word identifier (an identifier attached to the word data area on the computer memory), the corresponding word's logical definition and acceptance condition.

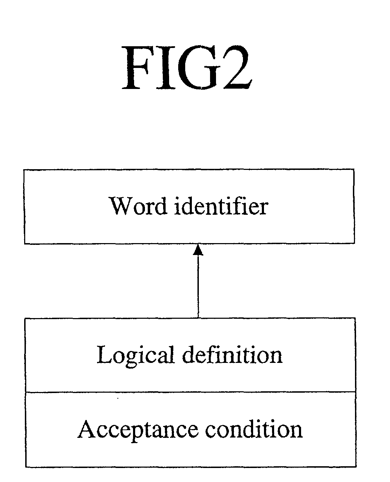

This unit is illustrated in Fig. 2.

(Unit formation): The form of a unit exists in the relationship of a word identifier and logical definition/acceptance condition. It is a state in which a signification has been established to a word identifier, as a result of formation being executed (i.e., logical definition/acceptance condition being executed). Here, the unit formation means the same that both a logical definition and an acceptance condition were satisfied. Also, the unit formation means the same that a signification was consequently established to a word identifier. Accordingly, whether both logical definition and acceptance condition were satisfied or not can be judged by whether a signification was established to a word identifier or not.

Further detailed description will be made of the unit.

Supposing there are two expressions (X = B + C) and (Y = B + C), verification will be made as to whether it can be determined that (X = Y) is satisfied.

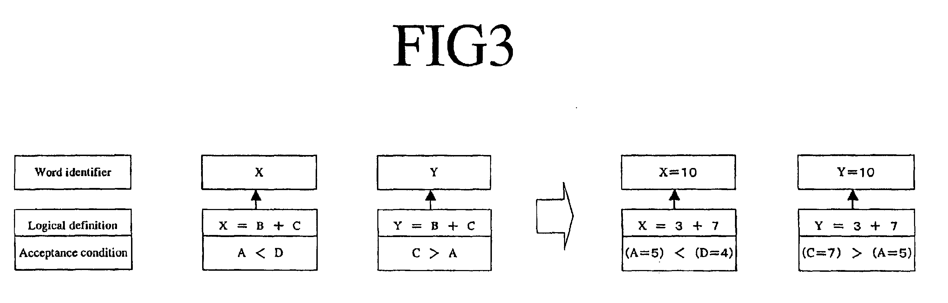

Here, suppose that there are word identifiers X, Y, A, B, C, and D, and a unit of X and Y is set as shown in Fig. 3.

When A = 5, B = 3, C = 7, and D = 4, X = 10 and Y = 10. However, the acceptance condition of X becomes invalidity and the counterpart of Y becomes validity. After all, X = Y becomes Validity when "X's logical definition/acceptance condition" and "Y's logical definition/acceptance condition" are the same.

In order to establish a signification of aword, both the logical definition and the acceptance condition are required.

### (Structural Principle 3)

In Structural Principle 3, the purpose of the synchronous structure is "to establish a signification to defined output words and output to the defined outputs".

(Defined): A physical access unit of input/output media handled by a computer.

For example, as input/output media handled by a computer, there are a screen and a database placed on the memory device, a file, communication media used to communicate with other computers, etc.

With respect to these input/output media, an input/output unit provided for inputting into or outputting from a computer is referred to as the defined.

(Defined Output): A defined output by a computer to input/output media.

(Defined Output Word): A word defined on the defined output.

For example, regarding the defined output as a screen, the area on the screen where a person enters data and the area where data is displayed by a computer are defined as "word", and the relevant word is called "defined output word".

(Defined Input): A defined input by a computer from input/output media.

(Defined Input Word): A word defined on the defined input.

For example, regarding the defined input as a database or a file, the data item in record format established per data input/output unit is defined as a word and the relevant word is called "defined input word".

The purpose of information process implemented on a computer can be said to output the defined output (a screen, a voucher, and a file) needed for jobs of information process.

On the other hand, the purpose of information system development is to create computer programs to do information process in order to output the defined output required.

Viewed from a standpoint of information system development, the object is too large if the purpose of information process is simply to output the defined output. So, it takes a standpoint that the smallest unit of information system development is treated as "defined output word", and "the defined output is a set of defined output words".

With a standpoint that "the defined output is a set of defined output words", the purpose of information system development, that is, the purpose of computer programs is as follows:
- To establish a signification to a plurality of defined output words existing in the defined output.
- To output a signification established to defined output words to the defined output which is a set of defined output words.

### (Structural Principle 4)

In Structural Principle 4, a tense control function and three kinds of pallets are provided as elements of the base structure, and each role is regulated.

There are provided one W02 pallet for one defined input, one W04 pallet for one defined output, and one W03 pallet for the whole.

(Tense Control Function): A function for executing the three kinds of pallets individually in a computer. And, W02 pallet includes a functionality for checking both the input of the defined input to a computer and the defined input word's data attribute.

W03 pallet is a pallet for establishing a signification to the defined output word. Here, the following two kinds of virtual pallets are provided in W03 pallet. W02i pallet that is a first virtual pallet includes functionality for taking over the content of the defined input word from W02 pallet. W04M pallet that is a second virtual pallet includes functionality for establishing a signification to the defined output word.

W04 pallet includes functionality for editing a signification of the defined output word and outputting from a computer to the target defined output.

### (Structural Principle 5)

In Structural Principle 5, a word identifier (word's data area) of the defined input/output is placed into three kinds of pallets for every word. When the relevant pallets handle words placed as above, the words are described as "pallet word".

W02 pallet is provided with a defined input word and a data area receiving the content of the defined input word entered into W02 pallet.

W02i pallet of W03 pallet is provided with a defined input word and a data area of a word taking over the content of the defined input word from W02 pallet.

W04M pallet is provided with a defined output word and a data area of a word establishing a signification to the defined output word.

W04 pallet is provided with a defined output word and a data area of a word in which a signification of the defined output word is edited to be output from a computer to the target defined output.

Note that a pallet word identifier is given by the same word identifier as the word identifier of the defined input/output.

### (Structural Principle 6)

In Structural Principle 6, (1) among words referenced for logical definition/acceptance condition in order for a pallet word to establish a signification, in order to refer to the signification of the defined input/output word handled by another base structure, a word data area is provided by the same word identifier as the defined input/output word handled by another base structure in the pallet to which the pallet word belongs and the reference is made by the relevant word identifier.

And, (2) the pallet which hands over the signification of the defined input/output handled by the base structure to another base structure is W04M pallet. From this reason, a defined input word's area is provided in W04M pallet for enabling the reference from another base structure.

Regarding both (1) and (2) above, the whole these word identifiers are generically described as "boundary word".

Here, pallets in which a boundary word is provided are W04M pallet in W03 pallet and W04 pallet. Among these, the boundary word of W04M pallet is a word identifier of the defined input/output handled by another base structure, referred to for logical definition/acceptance condition, whereby a pallet word establishes a signification, and also a word identifier of the defined input word in the same base structure to reference with another base structure.

W04 pallet is a word identifier of the defined input/output handled by another base structure, in which a pallet word refers to with the acceptance condition.

The base structure in which a boundary word is provided will duplicate the signification of the boundary word from another base structure.

With this facility, the base structure can make reference to the signification of the defined input/output word established in another base structure, without necessitating to know in what state another base structure has been executed.

### (Structural Principle 7)

In Structural Principle 7, as a component to realize information process logic, other than the tense control function and three kinds of pallets, which are executed in the base structure is defined as "synchronous vector" , and all such information process logic is solely realized by the synchronous vector.

(Duplication Vector): This is a vector that is provided per pallet word. The vector has functionality for handing over, per word, a signification established in the relevant pallet to other pallet.

As one of the duplication vectors, Y3 is placed in W02i pallet and hands over the signification from W02 pallet to W02i pallet.

Also, Y4 is a duplication vector placed in W04 pallet and hands over the signification from W04M pallet to W04 pallet.

(Signification Vector): This is a vector that is provided per pallet word. As one of the signification vectors, L2 is placed in W02 pallet and checks data attribute of the W02 pallet word.

Also, LI3 is a signification vector placed in W02i pallet and implements input-done check of the W02i pallet self word.

LM3 is a signification vector placed in W04M pallet and implements an action for signification formation of the W04M pallet self word.

LM4 is a signification vector placed in W04 pallet and edits the W04M pallet self word.

(Command Vector): This is a vector that is provided into a unit of defined output and defined input.

As one of the command vectors, PI implements input and output of a screen, a database, a file, and a communication message, etc. Here, the W02 pallet' s command vector must always be an input command vector. Also, the W04 pallet's command vector must always be an output command vector.

(Structural Vector): A structural vector PS is always placed in W04 pallet and initializes the data area of each pallet self word after implementing output in W04 pallet.

(Routing Action Vector): A routing action vector PN is a vector for specifying for the tense control function of the following: a pallet identifier activated next to the currently activated pallet identifier, the next-displayed screen identifier, and a new/continuous division.

(R-type Duplication Vector): A duplication vector YR is provided into a unit of boundary word and a vector for duplicating the signification established in the self's base structure, when reference is to be made to the signification established in another base structure as a given word in the self's base structure.

(Duplication Vector-type Signification Vector): A signification vector LY is provided into a unit of the defined input word which becomes the W04M boundary word and establishes a signification to the W04M's defined input word by using the signification of the W02i's defined input word.

### (Structural Principle 8)

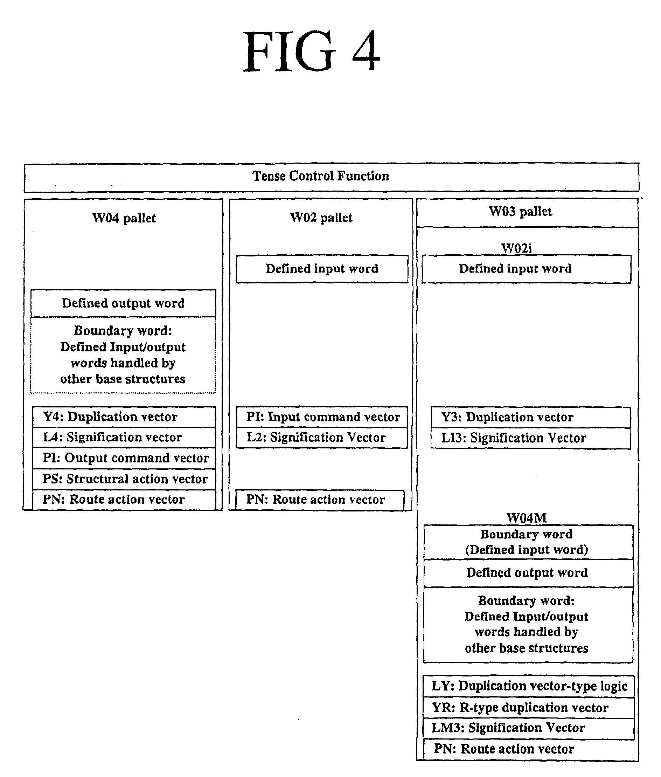

In Structural Principle 8, a synchronous vector is placed into three kinds of pallets as shown in Fig. 4. A pallet word and a boundary word are also described together.

### (Structural Principle 9)

Structural Principle 9 relates to a method with which three kinds of pallet' s execute order and the tense control function execute three kinds of pallets, and a method of forming a base structure link with another base structure.

Here, (1) the three kinds of pallets are executed in the order of W04 pallet, W02 pallet and W03 pallet. And, (2) a routing action vector, which is executed in the end of the synchronous vector executed in the three kinds of pallets, is placed into all pallets, and in accordance with the content specified by the routing action vector; <1> the tense control function activates the specified pallet identifier, and <2> the tense control function activates the specified other base structure. Thus, the three kinds of pallets are executed and a base structure link with another base structure is formed.

This will be described in detail hereinbelow.

By sequentially executing three kinds of pallets (W02, W03, and W04) by the tense control function, a control data area can be obtained for forming a base structure link.

Here, "Pallet execute control data area" includes a previous pallet ID, a current pallet ID, and a next pallet ID. In the "previous pallet ID", the pallet ID executed before the currently executed pallet is entered. In the "current pallet ID", the pallet ID executed currently is entered. In the "next pallet ID", the pallet ID to be activated next is entered.

A "screen Load Unload control data area" includes a "previous screen ID" in which the screen ID displayed before the currently-displayed screen is entered, a "current screen ID" in which the screen ID displayed currently is entered, and a "next screen ID" in which the screen ID to be displayed next is entered.

In the pallet word area, an initialize control data area is provided and a division of "new" or "continuous" is registered. For example, "New: 1" means to empty the pallet word's data area in the range from the current pallet ID to the next pallet ID of the pallet ID stack which has been activated so far up to the specified point of time. "Continuous: 2" means to activate the next pallet ID without emptying the pallet area.

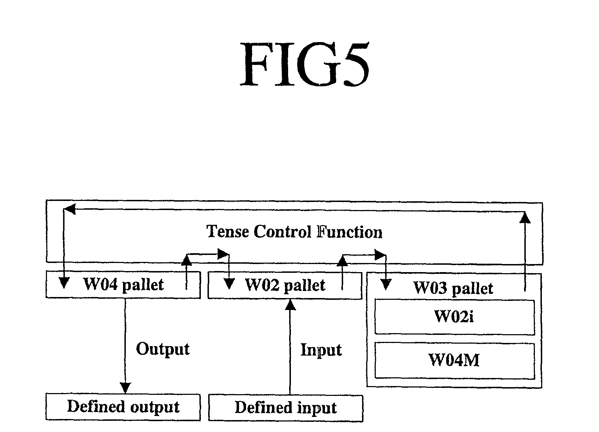

"By activating the pallet ID specified by the routing action vector, the tense control function executes three kinds of pallets sequentially as shown in Fig. 5."

Here, the "routing action vector" specifies the pallet ID to be activated next, the screen ID to be displayed next, and the new/continuous division, to the tense control function. As a result, three kinds of pallets are executed in sequence.

Specifically, when there are a plurality of pallet IDs to be activated next, the routing action vector is provided for each pallet ID. With W04 pallet, W02 pallet ID is specified. With W02 pallet, W03 pallet ID or W04 pallet ID is specified. With W03 pallet, W04 pallet ID is specified.

Next, movements of three kinds (W02, W03, W04) of pallets when the base structure operates will be explained as follows.
A. The tense control function is activated.
B. The tense control function activates W04 pallet. -> W04 pallet is processed (defined output is output). -> The control is returned to the tense control function.
C. The tense control function activates W02 pallet. -> W02 pallet is processed (defined input is input). -> The control is returned to the tense control function.
D. The tense control function activates W03 pallet. -> W03 pallet is processed (a signification is established to the defined output word). -> The control is returned to the tense control function.
E. The tense control function activates W04 pallet. -> W04 pallet is processed (defined output is output). -> The control is returned to the tense control function.
F. Thereafter, by repeating (C. -> D. -> E.), the target defined output can be obtained.

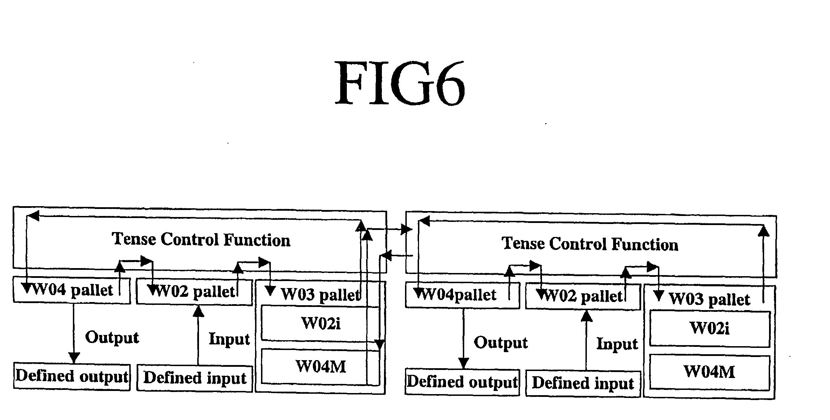

The tense control function realizes the formation of the base structure link by activating the specified base structures as shown in Fig. 6.

Here, the routing action vector specifies another base structure to be activated next for the tense control function.

Next, movements of the base structure link will be explained as follows.
A. The tense control function activates W03 pallet. -> W03 pallet is processed. -> The W04M pallet's routing action vector specifies another base structure to be activated next. -> The control is returned to the tense control function.
B. The tense control function activates another base structure. - > The another base structure is processed. -> The control is returned to the tense control function.
C. The tense control function activates W04M pallet. -> W04M pallet is processed. That is, -> the W04M pallet's routing action vector specifies another base structure to be activated next. -> The control is returned to the tense control function.
D. Thereafter, by repeating (B. -> C.), the base structure link process is performed the necessary number of times.
E. When the W04M pallet's routing action vector specifies W04 pallet in the same base structure without specifying another base structure to be activated next, the base structure link process ends and the tense control function activates W04 pallet in the same base structure.

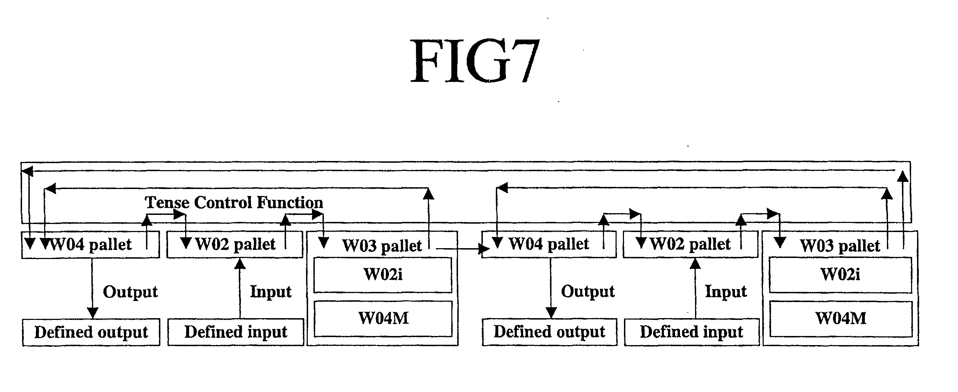

When there is only one tense control function, by specifying W04 pallet activation of another base structure, the formation of the base structure link is realized as shown in Fig. 7.

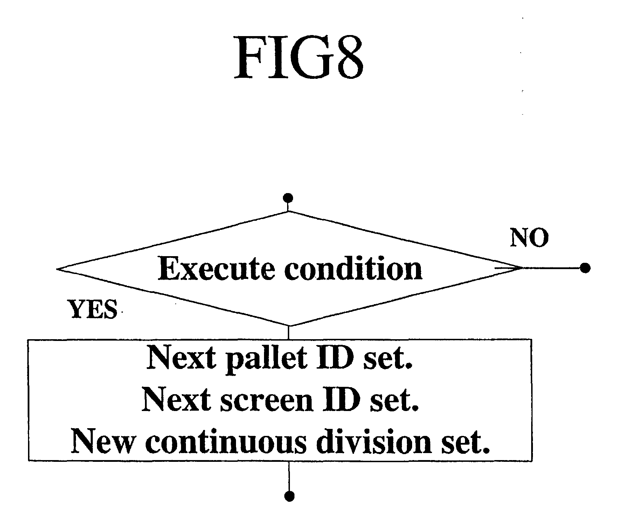

Next, the processing scheme (process flowchart) of the routing action vector is shown in Fig. 8 to Fig. 10.

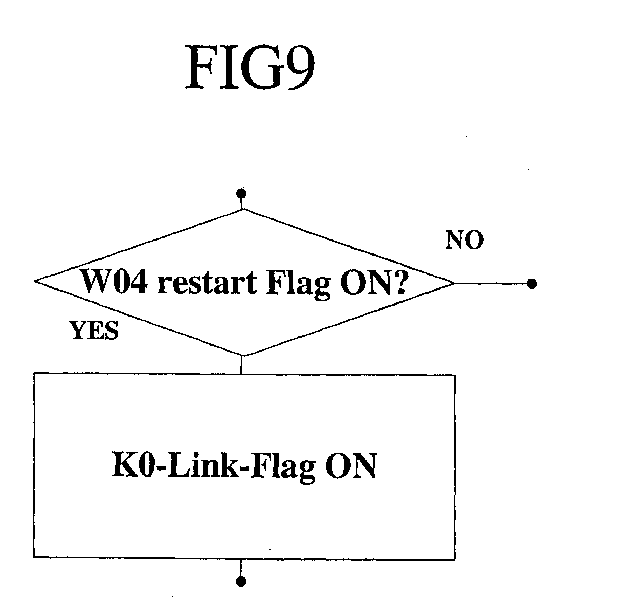

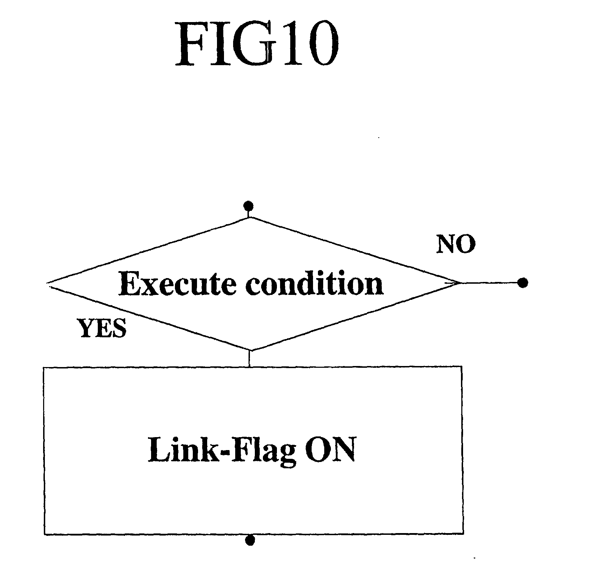

Fig. 8 shows the case of specifying the pallet ID to be activated next by the routing action vector PN. Fig. 9 shows the case of specifying the base structure (K0) to be activated next. Fig. 10 shows the case of specifying the base structure (T1) to be activated next.

Here, (1) the routing action vector judges the execute condition and autonomously implements process. Each pallet must only and simply execute the routing action vector.

(2) The first process performed by the routing action vector is to specify the pallet ID to be activated next, the screen ID to be displayed next, and the new/continuous division to the tense control function at the stage of ending execution of the pallet to which the routing action vector belongs (see Fig. 8). That is, when there are a plurality of pallet IDs to be activated next, a routing action vector is provided for each of the plurality of pallet IDs.

(3) The second process performed by the routing action vector is to specify another base structure to be activated next to the tense control function at the stage of ending execution of the pallet to which the routing action vector belongs. Here, when the base structure (K0) described later is activated, one routing action vector is provided for activating K0 (see Fig. 9). Also, when the base structure (T1) described later is activated, the routing action vector is provided in units of the input/output command vector of the defined input and defined output that are handled by T1 (see Fig. 10).

The execute conditions to be provided to the defined input include (1) judgment as to whether W04M is in a restarting state or not and (2) judgment as to whether the condition is the defined input concerned or not.

On the other hand, the execute conditions to be provided in units of the defined output include (1) a condition of outputting the defined output and (2) judgment as to whether another base structure has done nothing to output the defined output concerned or not.

### (Structural Principle 10)

A tenth structural principle is "self-orientation".

The self-orientation means the following two rules: (1) one of the synchronous vectors which handle the signification of the pallet word is provided for each pallet word; and (2) the synchronous vector which handles the signification of the pallet word handles only the signification of the relevant word, but does not handle the other words' significations.

The synchronous vectors which handle the signification of the pallet word include the following synchronous vectors and are generically described as a "Tense Control Vector".

| | | |
|---|---|---|
| W04 pallet | Y4: duplication vector | L4: signification vector |
| W02 pallet | | L2: signification vector |
| W02i pallet | Y3: duplication vector | LI3: signification vector |
| W04M pallet | YR: R-type duplication vector | |
| | LY: duplication vector-type signification vector | |
| | | LM3: signification vector |

The pallet word targeted by the tense control vector is simply described as a "self word".

The effects of Structural Principle 10 are as follows.

(1) The tense control vector only handles the signification of the self word, and against a plurality of pallet words, a plurality of tense control vectors handle different self words , respectively. Therefore, even if a tense control vector for one pallet word is deleted from or added to the pallet, no influence is given to other tense control vectors. This can be described as "Independence of Tense Control Vector".

(2) For the maintenance of the information system, addition or deletion of words existing in the defined such as a screen, a database, or a file is implemented, but the program maintenance related to the relevant defined can be accomplished simply by adding or deleting tense control vectors accorded to words to be added or deleted. Therefore, there is no need to check with the influence upon other tense control vectors due to the addition or deletion of words.

### (Structural Principle 11)

Structural Principle 11 means that: (1) the processing scheme (process flowchart) of the tense control vector will assume the same processing scheme for any words once a word, which is a unit of the signification, is defined; and (2) the tense control vector only handles the signification of the self word.

Here, as the tense control vector's execute conditions, judgment is made on whether a signification exists or not in a self word. As a judgment method, "self word content = empty?" or "self word content = not empty?" is used, and it is selectively used in accordance with the kind of tense control vectors.

The duplication vector described here is provided in a unit of pallet word. Then, the signification of other pallet word which possesses the same identifier as a self word of the pallet placed in a duplication vector, is duplicated into a self word. Also, duplication vectors for different self words are simply different in self word's identifiers, while the processing scheme is the same.

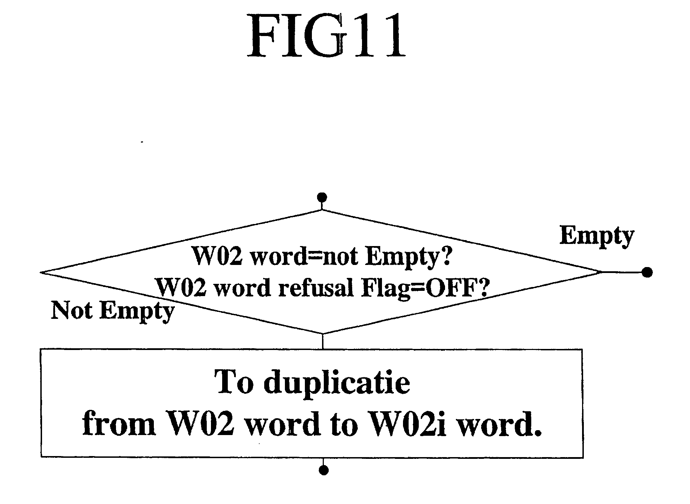

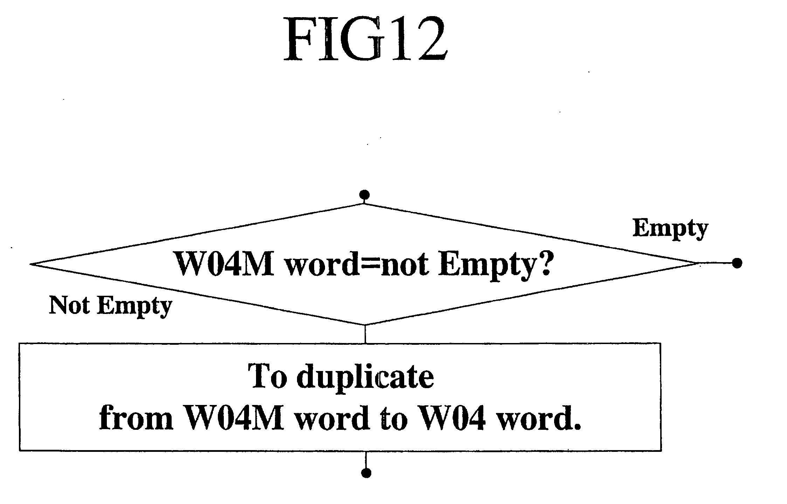

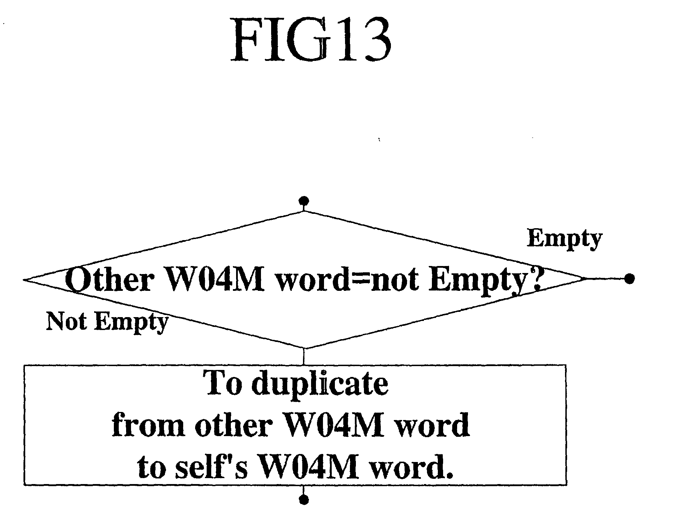

The processing flowcharts of the duplication vector Y3, the duplication vector Y4, and the R-type duplication vector YR are shown in Fig. 11 to Fig. 13, respectively.

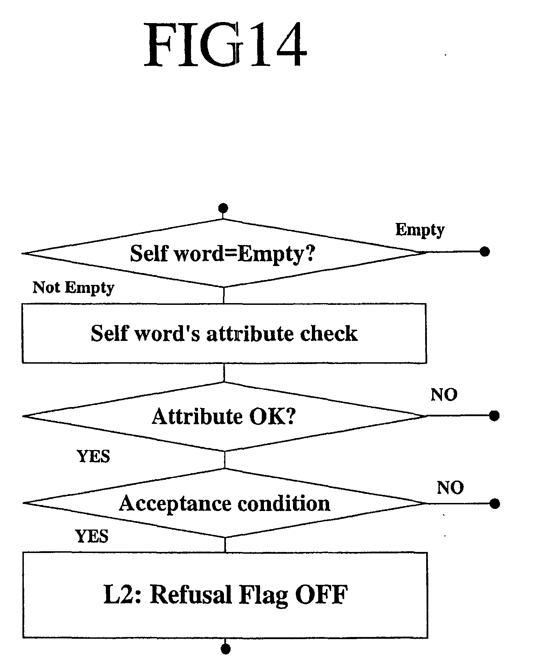

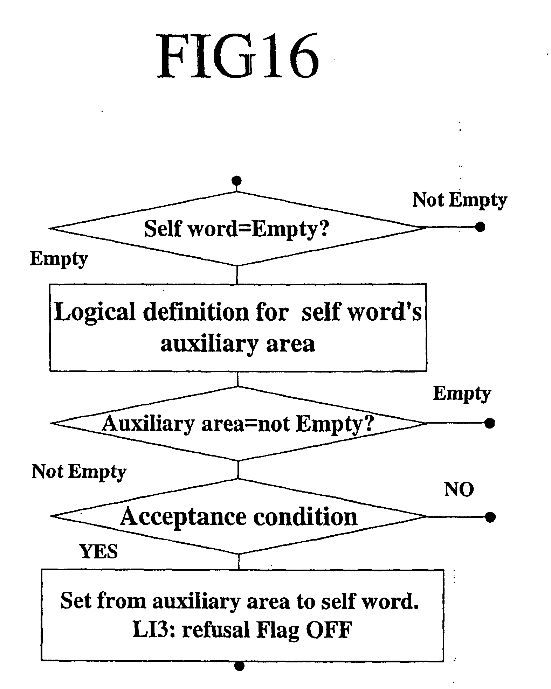

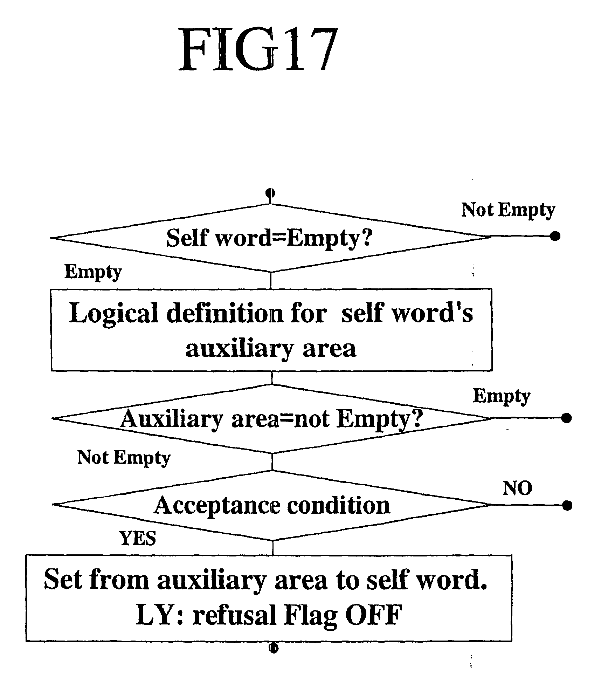

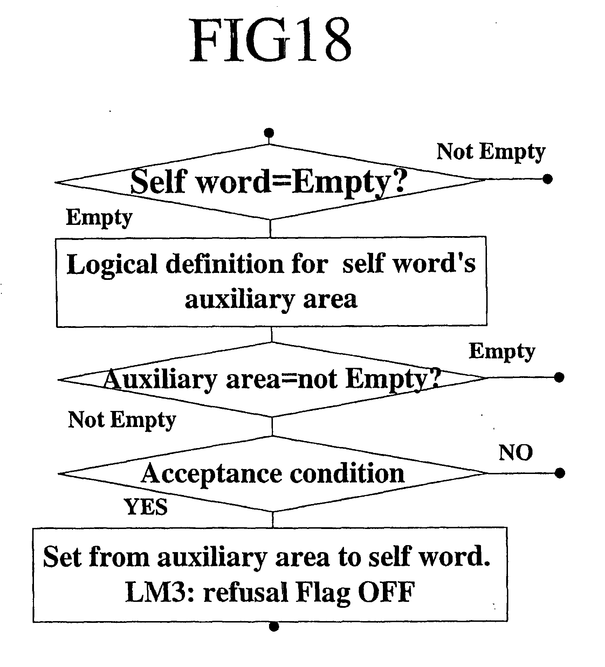

As shown in Fig. 14 to Fig. 18, the signification vector represents a concept of the unit in a processing scheme. In a unit of pallet word, it is provided one for one pallet word. A plurality of signification vectors for the plurality of self words are only different in their self word identifiers, and different parts between each self word are shown as steps indicated by the bold frames.

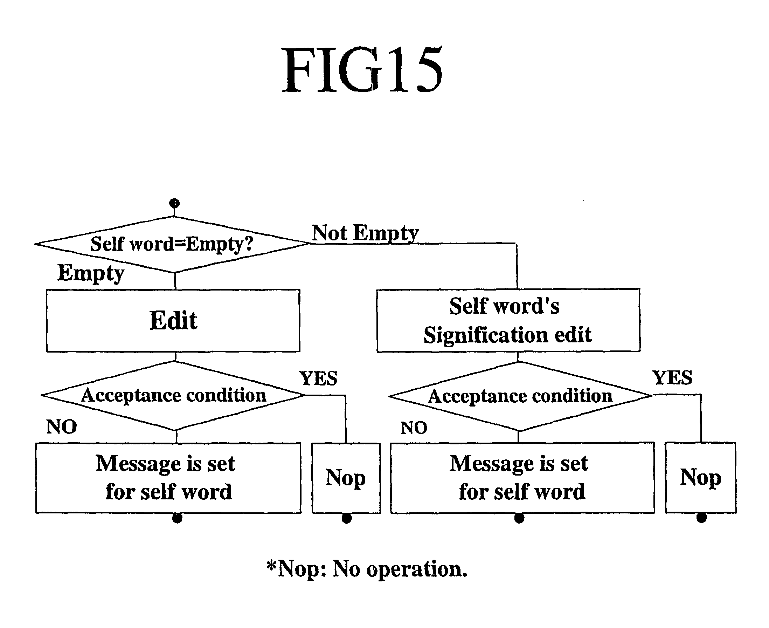

Note that "Nop" shown in Fig. 15 means "No Operation".

The effects of Structural Principle 11 are as follows.

(1) By using "Does a signification exists in a self word? (self word = empty?)" as a tense control vector's execute condition, the logic to handle the signification of a word can be made by a unit of word.

(2) The tense control vector autonomously does its processes based on the execute condition (self word = empty?), and thus, each of pallets may simply execute the tense control vector.

(3) Thus, the information system development work can do away with steps for detailing development requirements to be determined.

Each tense control vector is provided based on a word-unit. The tense control vectors have the same processing scheme, except word identifiers being different, so the content to be confirmed during information system development is the only part of differences in every self word with tense control vectors.

With tense control vectors, logic different in every self word is the following content, which is also the content to be confirmed during information system development.
- L2:: signification vector
: attribute check, acceptance condition
- L13:: signification vector
: logical definition, acceptance condition
- LY:: duplication vector-type signification vector
: logical definition, acceptance condition
- LM3:: signification vector
: logical definition, acceptance condition
- L4:: signification vector
: edit, acceptance condition, message

Speaking of a logic needed for information system as an "information system development requirement", the above content can be simply determined for every self word. Therefore, there is no need of detailed procedures such as to determine one by one with analysis of the whole logic and disintegration of the analyzed logic.

### (Structural Principle 12)

In the stage when the base structure has output the target defined output, two kinds of synchronous vectors are provided in which the pallet word's data area used to implement computer process is made empty and each refusal flag is set ON, which will make up a "structural action vector".

The tense control vector and command vectors, which handle a signification, take "pallet word = empty?" as their execute condition. Therefore, when the tense control vector and command vectors are executed by emptying the pallet word's data area, they do a working to establish a new signification to the pallet word.

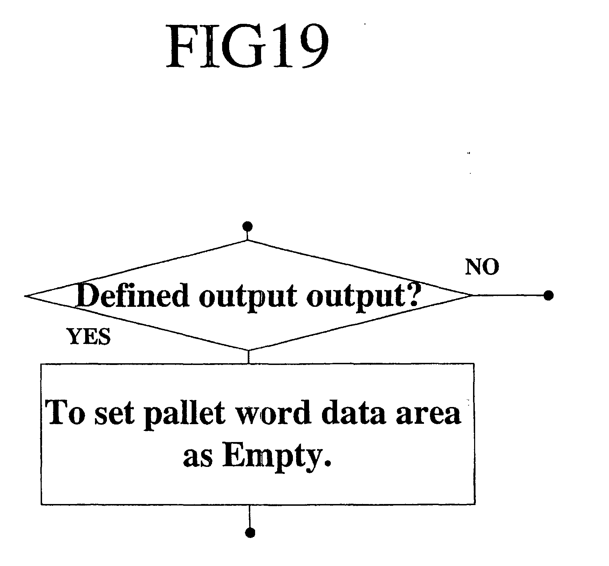

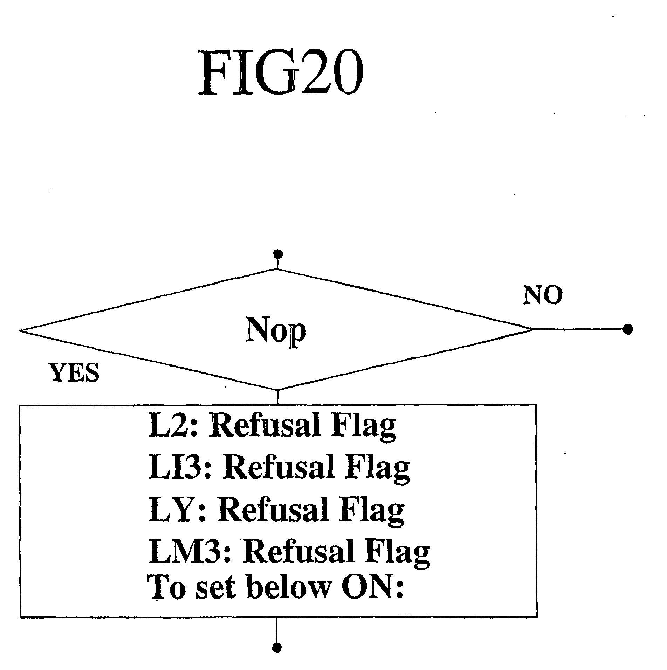

A process flowchart of the structural action vector is shown in Fig. 19 and Fig. 20.

Here first, (1) the structural action vector is placed in W04 pallet.

(2) In the stage when the base structure has output the target defined output, the structural action vector empties the pallet word data area of the defined output (W04 pallet: a defined output word, W04M pallet: a defined output word), and empties the pallet word data area of the defined input which has become the given word of the defined output word. The pallet word of the defined input means W02i defined input word and W02 defined input word.

(3) The structural action vector is provided in a unit of the defined which becomes a pallet word.

### (Structural Principle 13)

In this structural principle, (1) the synchronous vector handling the defined input/output is provided for every input/output command which handles the defined input/output. The examples of the input/output command include "open the defined", "close the defined", "read the defined", "output to the defined", etc.

(2) For every synchronous vector handling input/output, a control box is provided in W04M pallet and has the following content. <1> The execute status of input/output command of the relevant synchronous vector (Acceptance, Refusal), and an execute result of the relevant synchronous vector. <2> Relevant access-keys, when, with a synchronous vector to read or write a defined, the relevant defined possesses access-keys to implement read and write.

(3) The input command vector is a synchronous vector to handle input/output provided for every execute command which handles the defined input and placed in W02 pallet. On the other hand, the output command vector is a synchronous vector to handle input/output provided for every execute command which handles the defined output and placed in W04 pallet.

(4) The synchronous vector to handle input/output, when executed, operates after making judgment, based on an "execute condition", whether or not the input/output command must be executed. With this scheme, it can be simply executed when the pallet executes a synchronous vector of handling input/output.

The executed synchronous vector of handling input/output makes self judgment based on the "execute condition" and implements process autonomously.

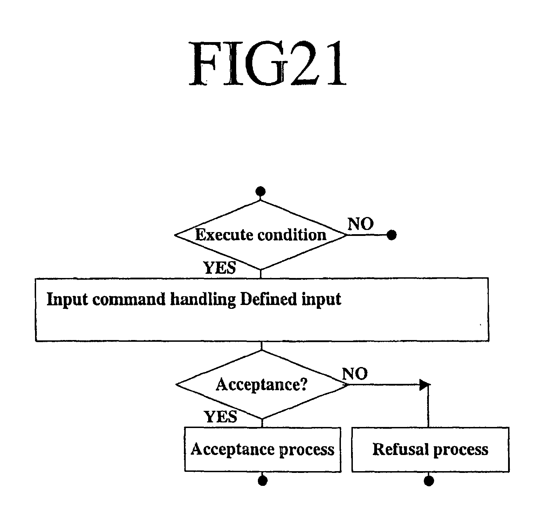

The flowchart of the basic processing scheme of the input/output synchronous vector is shown in Fig. 21.

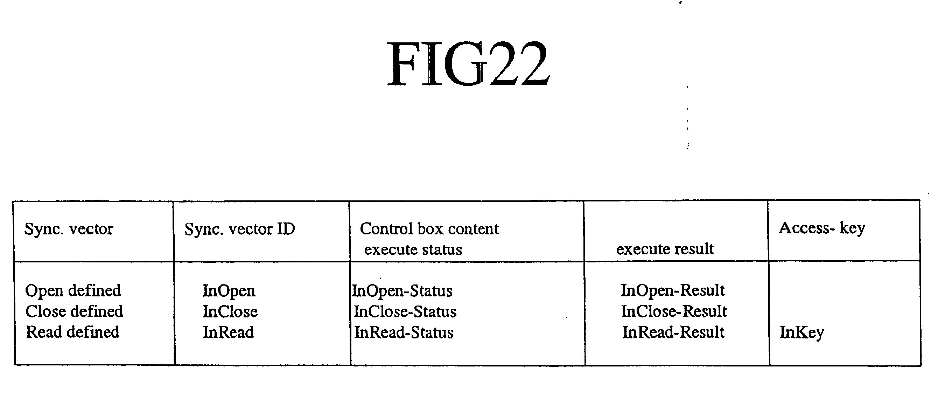

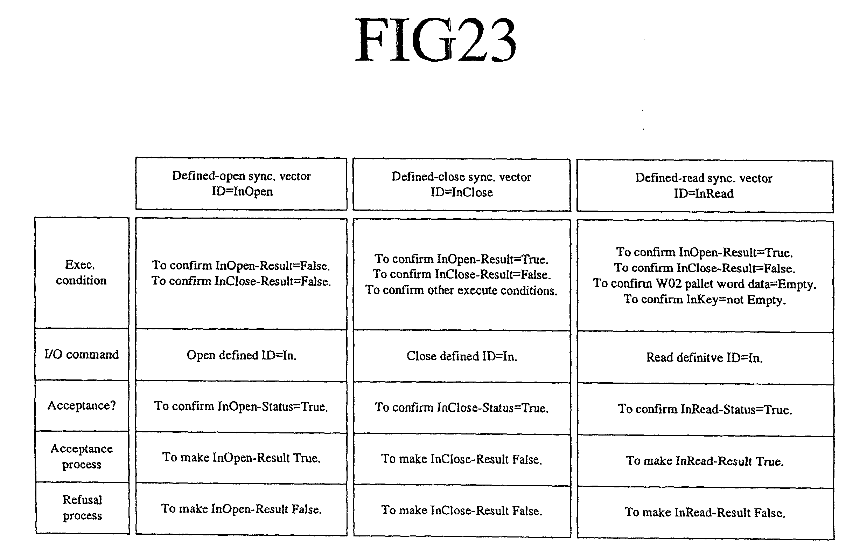

Next, when the defined input ID = In is set as an example of the synchronous vector of the defined input as shown in Fig. 22, the content of each related box of the flowchart of Fig. 21 is as shown in Fig. 23.

The input/output command obeys the access method provided by a computer to run the base structure, or the defined input/output command's description mode provided by program's programming languages.

For other execute condition included in execute conditions of the defined-closing synchronous vector, the timing of closing the defined is described.

For example, End-of-File (Up to the last defined has been read) , etc.

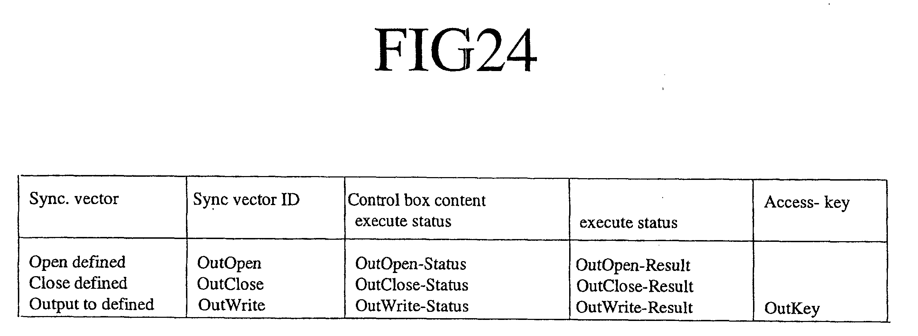

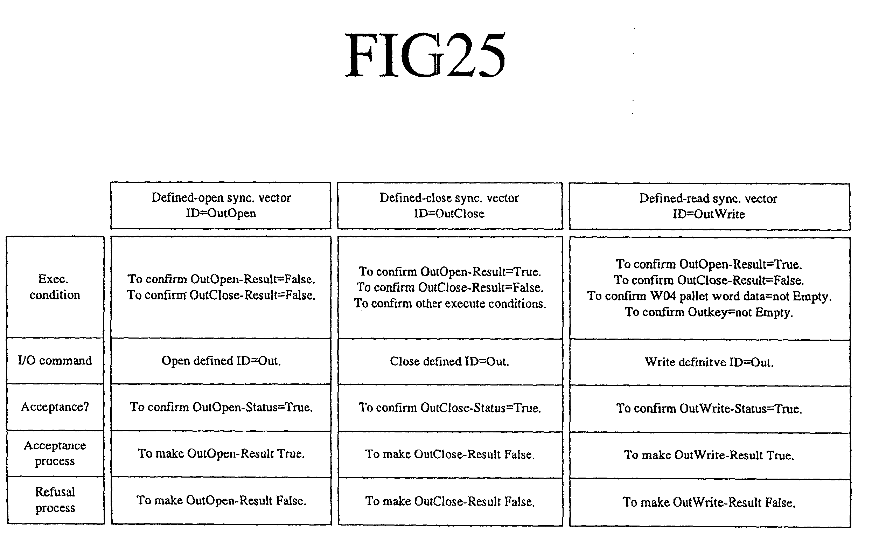

Next, when the defined output ID = Out is set as an example of the synchronous vector of the defined output as shown in Fig. 24, the content of each related box of the process flowchart is as shown in Fig. 25.

Here, the input/output command obeys the access method provided by a computer to run the base structure, or the defined input/output command's description mode provided by program's programming languages.

For another execute condition included in execute conditions of the defined-closing synchronous vector, the timing of closing the defined is described. For example, "All defined inputs are closed" etc.

### (Effects of Structural Principle 13)

According to Structural Principle 13, (1) a pallet may only and simply execute an input/output synchronous vector. That is, the input/output synchronous vector autonomously executes an input/output command with respect to the defined input/output.

(2) When an access method of the defined input/output is changed, the input/output command of the input/output synchronous vector should only be changed. That is, another synchronous vector is not affected so that there is no need to change it. This is deduced from the fact that the input/output command against the defined input/output is input only into the input/output synchronous vector but not into another input/output synchronous vector.

(3) When performing addition or deletion of a word within the record format of the defined input/output, <1> addition or deletion of a pallet word is performed, and <2> addition or deletion may be performed on a tense control vector, which is provided by one to one pallet word, in accordance with the addition or deletion of a word.

As a result, a change of a base structure in accordance with a change of the defined input/output becomes extremely easy. Also, the input/output synchronous vector with respect to the defined input/output and the tense control vector handling the signification of the pallet word do not affect each other. Accordingly, there is provided a characteristic in that "inputting from the defined input a defined input word to be referenced by a defined output word at a logical definition", "outputting to the defined output a defined output word with a signification established", and "establishing a signification to a defined output word" are completely separated.

### (Structural Principle 14)

The movement of the whole base structure will be shown.

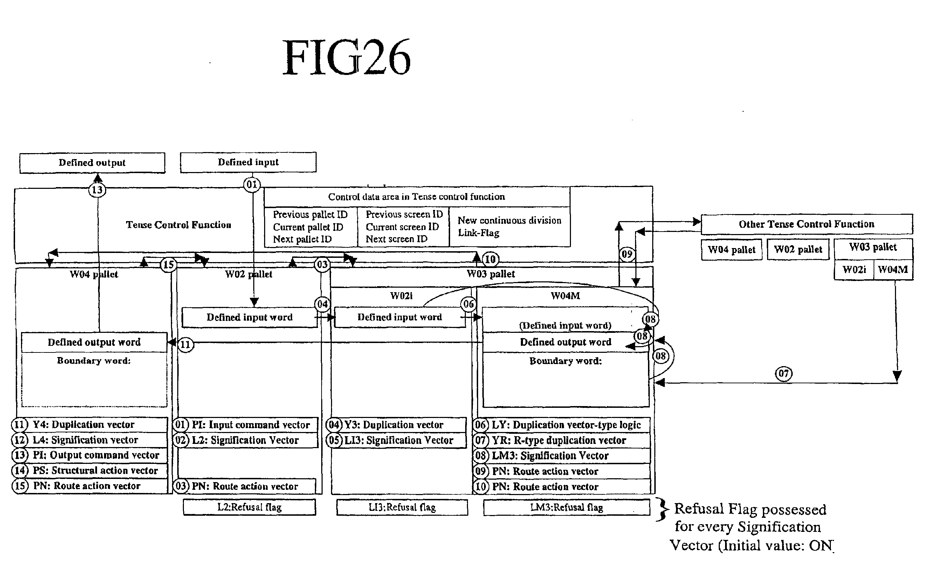

The movement of obtaining a defined input word from the defined input, then outputting a defined output word to the defined output will be described with reference to Fig. 26.

(1) The tense control function activates W02 pallet. Here, W02 pallet executes PI: input command vector.

(2) PI: input command vector inputs a defined input word from the defined input, if the W02 pallet word area is empty, as a W02 pallet word, and ends without doing anything if the signification remains in the W02 pallet word area. W02 pallet causes L2: signification vector to be executed as many times as the provided number thereof so as to be accompanied by restart. L2: signification vector is provided for the same number as the plurality of W02 pallet words.

(3) L2: signification vector checks the signification attribute, if a signification exists in a self word. If the signification's attribute check is invalidity, the checking ends. If the signification's attribute check is validity, the acceptance condition is judged. If the acceptance condition is invalidity, the checking ends. If acceptance condition is validity, L2: Refusal Flag is set OFF.

Next, W02 pallet causes PN: Routing action vector to be executed.

(4) PN: Routing action vector sets the following content into the control data area possessed in the tense control function.
Next pallet ID = W03 pallet ID,
Next screen ID = Next-display screen ID,
New/continuous division = (continuos: 2).

After ending the above processes, W02 pallet execution ends. Then, when W02 pallet execution ends, a new W02 pallet word is input into W02 pallet and attribute check is implemented. Then, controls return to the tense control function. The tense control function does not empty the pallet word area because of new/continuous division = (continuos: 2). The tense control function activates W03 pallet because the next pallet ID = W03 pallet. W03 pallet activates W02i pallet.

Y3: duplication vector and LI3: signification vectors are provided for the same number as the plurality of W02i pallet words. W02i pallet causes Y3: duplication vector to be executed as many times as the provided number thereof.

(5) Y3: duplication vector judges whether a signification exists in the W02 pallet word possessing the same identifier as the self word identifier. If a signification exists, the signification of the W02 pallet word possessing the same identifier as the self word identifier is duplicated in the self word. If a signification does not exist or it ends without doing anything. W02i pallets are executed as many as they were provided with LI3: signification vector.

(6) LI3: signification vector judges on that a signification does not exist in the self word. If a signification exists, it ends without doing anything. If a signification does not exist, it executes logical definition. As a result of executing logical definition, it ends if a signification does not exist. As a result of executing logical definition, it judges on acceptance condition if a signification exists. It ends if acceptance condition is invalidity. LI:3 refusal Flag is set OFF if acceptance condition is validity.

LI3: refusal Flag ON means that nothing has been entered into the defined input. At this stage, the signification of the defined input word has been checked whether it was handed over from W02 pallet to W02i pallet, and entered or not entered.

Next, the control returns to W03 pallet. W03 pallet activates W04M pallet. LY: duplication vector-type signification vectors are provided in W04M for the same number as the defined input words provided as boundary words. W04M pallets are executed as many as they were provided, which is accompanied by restarting LY: duplication vector-type signification vector.

(7) LY: duplication vector-type signification vector judges on that a signification does not exist in the self word. Here, it ends without doing anything if a signification exists. If a signification does not exist, it establishes a signification to a self word based on only the signification of the defined input word in W02i pallet possessing the same identifier as the self word. As a result of logical definition execution, it ends if a signification does not exist in the auxiliary area. As a result of logical definition, it judges on acceptance condition if a signification exists in the auxiliary area. Here, it ends if acceptance condition is invalidity. If acceptance condition is validity, it establishes a signification to a self word from the self word's auxiliary area, and sets refusal Flag OFF to end.

Next, YR R-type duplication vectors are provided in W04M for the same number as they were provided in W04M as boundary words. W04M pallets are executed as many as YR: R-type duplication vectors were provided.

(8) LR: R-type duplication vector duplicates the signification to the self word, if a signification exists in the word identifier in W04M of another base structure possessing the same word identifier as the self word. If a signification does not exist, it ends without doing anything. Here, LM3: signification vectors are provided for the same number as W04M pallet words. Also, an auxiliary area assisting the formation of signification per word unit is provided to the defined output word which is a W04M pallet word. W04M pallets are executed as many times as they were provided, which is accompanied by restarting of LM3: signification vector.

(9) LM3: signification vector judges on that a signification does not exist in the self word. It ends without doing anything if a signification exists. If a signification does not exist, it establishes a signification to a self word' s auxiliary area by taking as a given word W02i defined input word, boundary word and W04 defined output word. As a result of logical definition execution, it ends if a signification does not exist in the auxiliary area. As a result of logical definition execution, it judges on acceptance condition if a signification exists in the auxiliary area. Here, it ends if acceptance condition is invalidity. If acceptance condition is validity, it establishes a signification to a self word from the self word's auxiliary area, and sets refusal Flag OFF to end.

W04M pallet compares a state of a pallet word before executing LY: duplication vector-type signification vector and LM3: signification vector and a state of the pallet word after executing Ly: duplication vector-type signification vector and LM3: signification vector. If there is a difference at this point, it executes again the whole of LY: duplication vector-type signification vector and LM3: signification vector. If they are the same, it moves next without activating the restart.

Next, W04M pallet executes PN: routing action vector.

There are two kinds of PN: routing action vectors.
<1> PN: routing action vector to specify the tense control function to activate another base structure.
<2> PN: routing action vector to specify the tense control function to activate W04 pallet.

(10) The PN: routing action vector to specify the tense control function to activate another base structure is provided one for every defined input desired to be input by another base structure and for every output command vector of the defined outputs desired by another base structure and the following are judged as execute conditions.

That is, the execute conditions of PN: routing action vector provided for every defined input of another base structure are as follows.
<1> W04M restart?
<2> Input condition of the relevant defined input?

Also, the execute conditions of PN: routing action vector provided per another defined output are as follows.
<1> An output condition for a defined output is validity?
<2> No relevant output of the defined output was implemented in another base structure?

If execute condition is validity at this point, specifies the base structure's identifier requested for activation. If execute condition is invalidity, it ends without doing anything. The tense control function does nothing if the base structure's identifier requested for activation is not specified. The tense control function activates another base structure, if the base structure's identifier requested for activation has been specified. Here, after another base structure is activated and the execution thereof ends, the control returns to the tense control function.

Next, the tense control function again activates W04M pallet.

By activating another base structure, W04 self word refers as a given word to the signification of the defined input/output words, which are input/output by another base structure, and establishes a signification.

(11) If a plurality of W04 pallets exist in the base structure, the PN: routing action vector specifying the tense control function to activate W04 pallet has an execute condition which one of the W04 pallets existing in the base structure is to be activated. If the execute condition is met, it specifies next pallet ID = W04 pallet ID, next screen ID = screen ID, and new/continuous division, to the tense control function.

The tense control function activates the specified W04 pallet. At this time, if specified as new/continuous division = (new: 1), it sets W04 pallet, W02 pallet and W03 pallet, which have been activated up so far, in the order of their activation and if the specified W04 pallet exists among them, it empties the pallet word data area from the relevant W04 pallet to the last of the pallets set in order.

Next, W04 pallet executes Y4 duplication vector. This Y4: duplication vector is provided for every W04 pallet word.

(12) The Y4: duplication vector duplicates, if a signification exists in the W04M pallet word possessing the same word identifier as the self word, the signification to a self word and ends its process. If a signification does not exist, it ends without doing anything.

W04 pallet executes L4: signification vector. This L4: signification vector is provided for every W04 pallet word.

(13) L4: signification vector performs editing to output the signification of the self word to the defined output. When outputting a pallet word to the defined output, if a message is required, it judges on acceptance condition and sets a message number.

At this time, there are two acceptance conditions: whether W02 refusal Flag, W02i refusal Flag, and W04M refusal Flag of the word identifier possessing the same word identifier as the self word are ON or not; and whether other acceptance conditions are satisfied or not.

Next, W04 pallet executes PI: output command vector.

(14) The PI: output command vector outputs the signification of W04 pallet word from the W04 pallet word to the defined output. Here, when the defined output is a screen, the output is implemented unconditionally. When the defined output is a database or a file, it is determined that the signification has been established for every W04 pallet word. When a signification has not been established for every W04 pallet word, the process ends without doing anything. When a signification has been established for every W04 pallet word, an output command is executed.

When the output command was executed normally, it sets ON output command execute status and command execute result and ends. When the output command was not executed normally, it sets OFF output command execute status and command execute result and ends.

W04 pallet executes PS: Structural action vector. This PS: Structural action vector is provided for every defined input and defined output.

(15) There are two kinds of PS: Structural action vectors. The first one determines that PI: output command vector has executed the output command (regardless of normally or abnormally), and when the output command has been executed, empties W04 pallet word and W04M pallet word with which the output command was executed. This means emptying the words which were referenced as given words by the W04M pallet word of the defined output with which the output command was executed, namely the W04M defined input word, W02i pallet word, and W02 pallet word.

The second one sets refusal Flags of each pallet word (W02 refusal Flag, W02i refusal Flag and W04 refusal Flag) to ON. Next, W04 pallet executes PN: routing action vector.

(16) PN: routing action vector specifies next pallet ID = W02 pallet ID, next screen ID = screen ID, and new/continuous division, 1 to the tense control function. After W04 pallet thus ends, controls return to the tense control function. When the defined output is a screen, the screen is output, and a person performs screen operation and waits for the occurrence of execute events after depressing the execute button, etc. Here, when execute events occurs, controls return to the tense control function again. Then, the tense control function activates W02 pallet.

When the defined output is a database or a file, the tense control function activates W02 pallet.

### (Structural Principle 15)

Structural Principle 15 is "data connection". The data connection means here that referencing of a signification of established words substitutes all logic up to establishing a signification to words to be referenced.

The execute condition of the tense control vector handling signification of a word is "self word = empty?".

Also, for all pallet words, a signification vector is provided in a word unit.

Further, a signification vector possesses a logical definition and an acceptance condition. Here, the formation of a signification to a self word indicates that the logical definition and the acceptance condition have been satisfied.

The logical definition is an expression to bring out a signification only to the self word, but by collecting logical definitions of all words, the relation of all words is expressed by the relationship of the self words and the given words. From this, it can be said that when the signification vector is executed by a pallet, "the signification established to a given word is a result of executing all logic up to establishing a signification to the given word", with respect to the given words referred to in the logical definition in the signification vector.

Accordingly, referencing the signification of a given word in a signification vector's logical definition substitutes all logic up to establishing a signification to the given word.

The following results are obtained by this Structural Principle 15 (data connection).
(1) Logical definition can be described for every word, without considering the complex relation of words. That is, logical definition can be described by being limited only to the relation of the given words to be referenced by the self words.
(2) A result of describing logical definition of all words represents the complex relation of words. At the time of describing logical definition, it is not necessary to analyze the relation of all words.
(3) At the time when logical vector is executed by a pallet (i.e., when logical definition is executed), a logic of all relations between words is realized by using data connection.

The base structure implements three kinds of data connection: data connection among three kinds of pallets implemented by the duplication vectors (Y3, Y4) and the duplication vector-type signification vector (LY); data connection between base structures implemented by the duplication vector (YR); and data connection of an inter-word logic which is implemented by the signification vector (LM3).

(1) Data connection among three kinds of pallets implemented by duplication vector (Y3: duplication vector, Y4: duplication vector) and LY: duplication vector-type signification vector.

(2) Data connection between the base structures implemented by duplication vector (YR: R-type duplication vector).
(A) In W02 pallet, a defined input is input into W02 pallet word. L2: signification vector implements attribute check on a self word's content.
(B) In W02i pallet, Y3: duplication vector duplicates the signification of W02 pallet word possessing the same identifier as the self word. Then, LI3: signification vector implements signification formation action to the self word. Here, LI3: signification vector substitutes the logic implemented in W02 pallet by handling the signification of the self word which is a result of the duplication by the duplication vector.
(C) In W04M pallet, LY: duplication vector establishes the signification of W02i pallet word possessing the same identifier as the self word. Here, YR: R-type duplication vector duplicate the signification of the defined input/output word handled by another base structure possessing the same identifier as the boundary word. Also, LM3: signification vector establishes a signification to the self word by using, as a given word, W02i defined input word, boundary word, and W04M defined output word. The LM3: signification vector substitutes a logic implemented with W02 pallet and a logic implemented with another base structure by referencing the signification of the given words which is a result of the duplication by Y3: duplication vector and YR: R-type duplication vector.
(D) In W04 pallet, Y4: duplication vector duplicates the signification of W04M pallet word possessing the same identifier as the self word. Here, L4: signification vector edits the signification of the self word. Also, PI: output command vector outputs the signification of W04 pallet word to the defined output. Here, the L4: signification vector substitutes a logic implemented with W02 pallet, W02i pallet, another base structure, and W04M pallet by handling the signification of the self word which is a result of the duplication by Y4: duplication vector.

The signification of the W04 pallet word output by the output command vector is an execute result of all logic.

(3) Data connection of between-word logic which is implemented by LM3: signification vector.

With logical definition of the self word, it is sufficient that only given words as viewed from self words are described in the logical definition. At this time, the given word also has logical definition as a self word by itself. Therefore, it is not necessary to consider logical definition of the given word. Here, LM3: signification vector is provided one for every one W04M pallet word (defined output word). This LM3: signification vector's logical definition establishes a signification of the self word of LM3: signification vector. With logical definition, the relation between the self word and the given word referenced to by the self word is specified.

It is assumed that, for example, with the W04M pallet word, there are A, B, C, D, and E, and the corresponding LM3: signification vectors are designated as A-LM3, B-LM3, C-LM3, D-LM3 and E-LM3, and there are Ai and Bi with W04M defined input word, and there are Q, R, S, R, T, and U with the W04M boundary word.

Assuming here that the logical definition of the W04M pallet word was described as follows:
- A-LM3:: logical definition A = Ai + Q + R
- B-LM3:: logical definition B = Bi
- C-LM3:: logical definition C = B + S
- D-LM3:: logical definition D = A + T + U
- E-LM3:: logical definition E = C + D

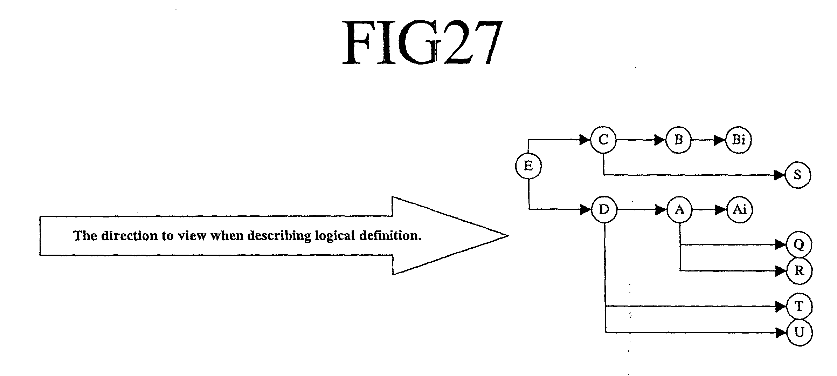

At this time, if the relation of the self word and the given word is expressed, it takes the same meaning of having described the relationship shown in Fig. 27.

In Fig. 27, an arrow indicates given words to be referenced as viewed from the self word.

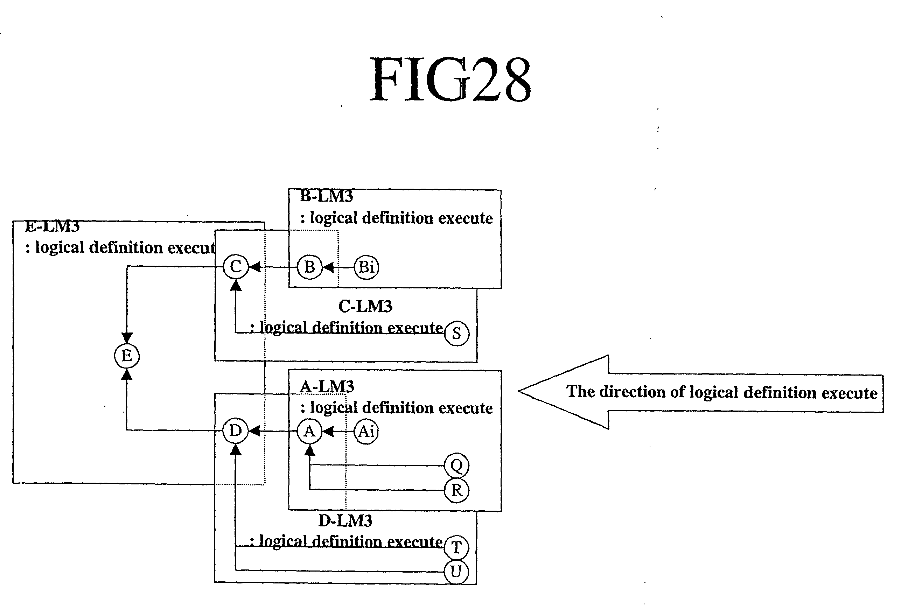

LM3: signification vector is provided for every W04M pallet word, and as a result of describing logical definition to all LM3: signification vectors, the relationship between words can be grasped as a link of the relation of the self word and the given word. When W04M pallet word's LM3: signification vector is executed, its logical definition is executed. At this time, the relation of the self word and the given word follows the direction of execution as indicated by an arrow <- in Fig. 28.

A-LM3: logical definition A = Ai + Q + R is executed, and a signification is established to A.

B-LM3: logical definition B + Bi is executed, and a signification is established to B.

C-LM3: logical definition C = B + S is executed, and a signification is established to C.

At this time, the reference to B's signification has the same meaning as substituting an expression (B = Bi) into B.

D-LM3: logical definition D = A + T + U is executed, and a signification is established to D.

At this time, the reference to A's signification has the same meaning as substituting an expression (A = Ai + Q + R) into A.

E-LM3: logical definition E = C + D is executed, and a signification is established to E.

At this time, the reference to C's signification has the same meaning as substituting an expression (C = B + S) and additionally an expression (C = Bi + S), into C.

At this time, the reference to D's signification has the same meaning as substituting an expression (D = A + T + U) and additionally an expression (D = (Ai + Q + R) + T + U), into D.

With boundary words Q, R, S, T, and U, it takes the same meaning as that the reference is made to a data connection resulted from execution of the logical definition implemented with another base structure.

### (Structural principle 16)

Structural Principle 16 relates to "restart".

The "restart" means to execute mutually independent vectors of the synchronous structure a plurality of times.

Normally, the "loop process" described in computer programs is limited to the following three kinds with the synchronous structure.

(1) The order activating three kinds of pallets inside the base structure.

That is, W04 pallet, W02 pallet, and W03 pallet are made to operate in this order.

(2) The base structure link with another base structure.

The base structure link is implemented by W04M routing action vector's instruction.

(3) Restart process implemented with W04M pallet.

The whole signification vectors inside a pallet are executed so as to be accompanied with the restart.

Note that, with the synchronous structure, the time requiring considering the order for moving vectors of the synchronous structure is only when to create a routing action vector. The role activating three kinds of pallets inside the base structure and the role implementing the base structure link are limited to the pallet ID to be activated next and the base structure ID to be activated next which are specified by the routing action vector.

The synchronous vector placed in pallets may be placed in accordance with the placement order for every synchronous vector of the same kind. That is, the synchronous vector has the following characteristics.

(1) The order for placing synchronous vectors becomes a general order for establishing a signification to the words and outputting the signification of the words.

(2) The synchronous vector autonomously implements process when executed.

(3) By executing in-pallet signification vectors, accompanied with the restart as a whole, the data connection between-word logic can be realized without considering the process order of a plurality of signification vectors and a plurality of action vectors.

An example of the restart process implemented inside W04M pallet will be described.

In the W04M pallet word, there are A, B, C, D, and E, and the logical definition auxiliary areas are assumed to be A-w, B-w, C-w, D-w, and E-w.

Assume that the corresponding LM3: signification vectors are designated as A-LM3, B-LM3, C-LM3, D-LM3, and E-LM3.

Assume that there are Ai and Bi with the W04M defined input word, and there are Q, R, S, T, and U with the W04M boundary word.

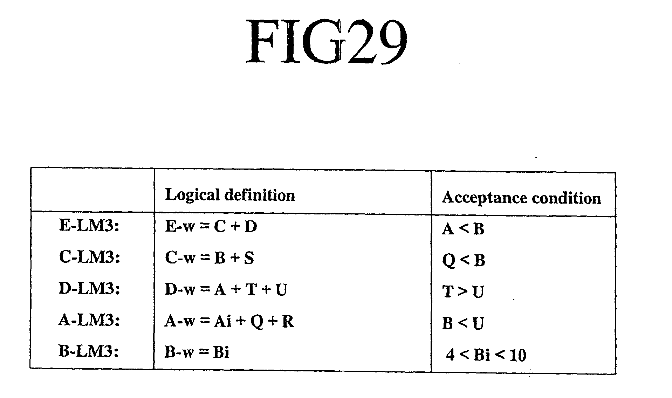

The logical definition and acceptance condition of the signification vector are described as shown in Fig. 29, and it is assumed that the execute order is the order when placing the signification vectors.

W04M pallet executes the whole LM3: signification vector, accompanied with their restart.

In the case of a state upon the execution accompanied with the restart, Ai = 2 and Bi = 8 are entered to obtain Q = 4, R = 1, S = 6, T = 11, and U = 9,

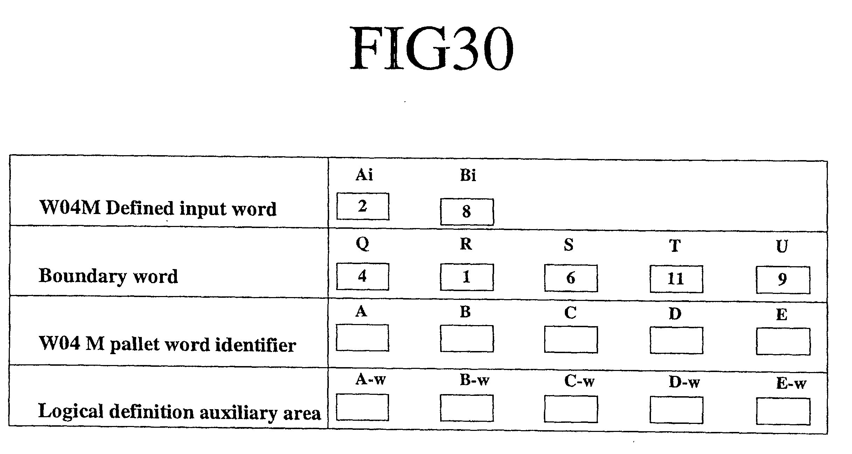

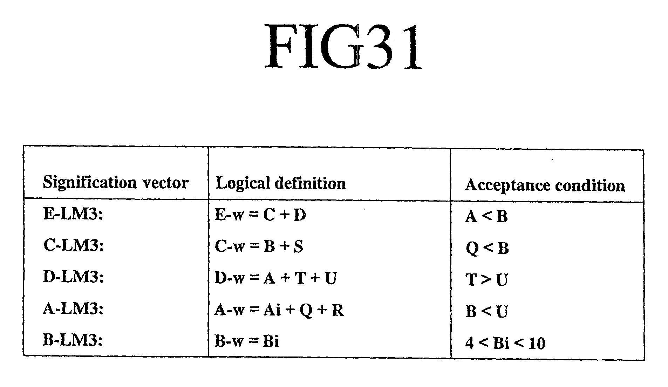

Fig. 30 to Fig. 39 show variation of each value.

In each drawing, a rectangular frame indicates a data area. An explanation is made from the stage when the duplication vector duplicates the signification of the W04M defined input word and the signification of the boundary word.

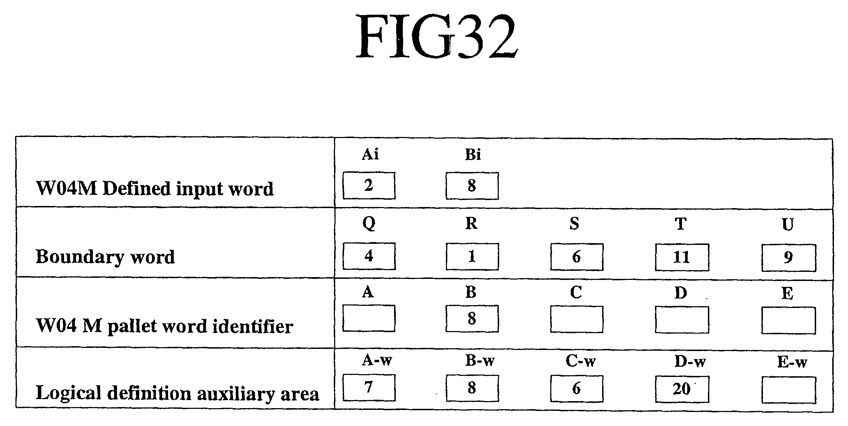

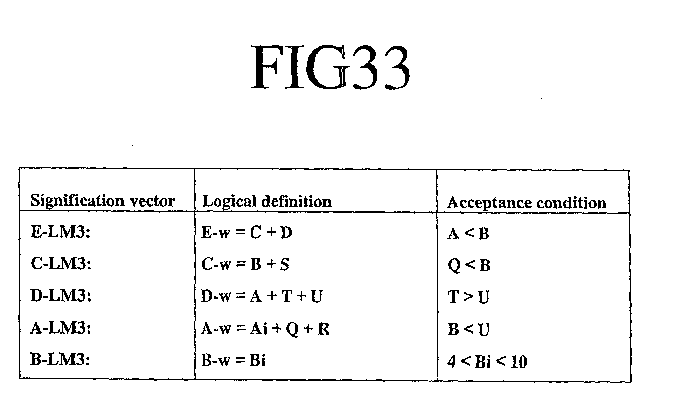

First, the first-time execution shows changes as shown in Fig. 32 and Fig. 33.

Here, with E-w, at the time of executing E-LM3, the signification is not established because there is no signification established to given words C and D.

With C-w, the acceptance condition is satisfied which obtains that the signification = '6' and at the time of executing C-LM3, the signification is not established to given word C because there is no signification established to given word B.

With D-w, the acceptance condition is satisfied which obtains that the signification = '20' and at the time of executing D-LM3, the signification is not established to given word D because there is no signification established to given word A.

With A-w, the signification = '7' is established, but the acceptance condition of A-LM3 is not satisfied due to ("B = empty"), so that the signification is not established to A.

With B-w, the signification = '8' is established and the acceptance condition of B-LM3 is satisfied, so that the signification = '8' was established to B.

W04M pallet compares the state of the pallet word before executing LM3: signification vector and the state of the pallet word after executing LM3: signification vector.

As a result, the state of the pallet word is different from the previous state, so that LM3: signification vector as a whole is executed again.

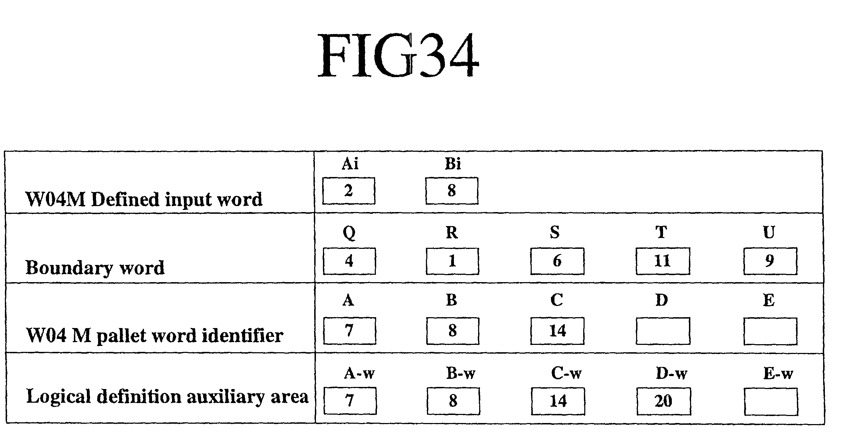

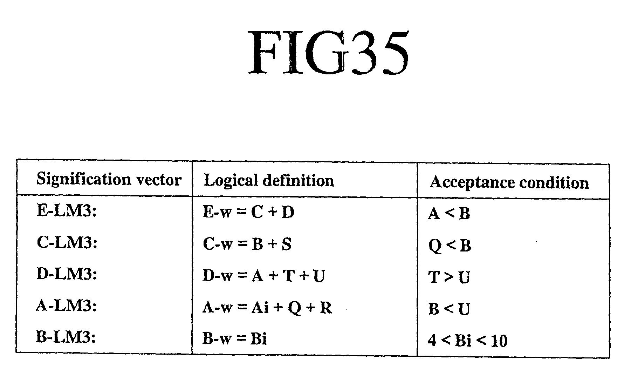

The second-time execution shows changes as shown in Fig. 34 and Fig. 35.

Here, with E-w, at the time of executing E-LM3, the signification is not established because there is no signification established to given words C and D.

With C-w, signification = '14' is obtained and the acceptance condition is satisfied, so that the signification = '14' is established to C.

With D-w, the acceptance condition is satisfied which obtains that the signification = '20' but at the time of executing D-LM3, the signification is not established to given word D because there is no signification established to given word A.

With A-w, the signification is established to the given word, so that the signification = '7' is obtained. At this time, the acceptance condition is satisfied, so that the signification = '7' is established to A.

B-LM3 does nothing because it has already established the signification.

W04M pallet compares the state of the pallet word before executing LM3: signification vector and the state of the pallet word after executing LM3: signification vector.

Here, the state of the pallet word has changed from the previous state, so that LM3: signification vector as a whole is executed again.

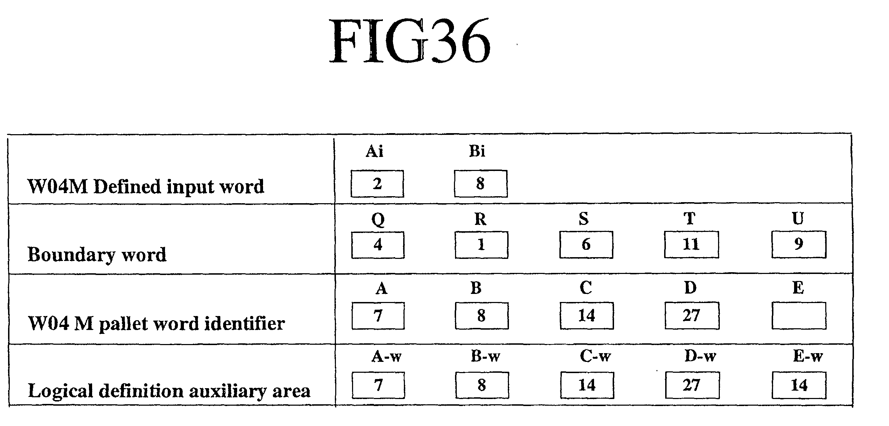

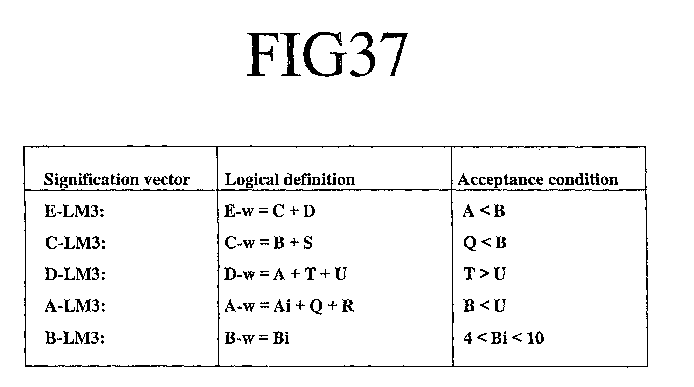

At the third-time execution, the state becomes as shown in Fig. 36 and Fig. 37.

With E-w, the acceptance condition is satisfied which obtains that the signification = '14', but at the time of executing E-LM3, the signification is not established to given word D, so that the signification is not established to E.

C-LM3 does nothing because it has already established the signification.

With D-w, the signification is established to the given word, so that signification = '27' is obtained at the third-time execution, and the acceptance condition is satisfied, so that the signification = '27' is established to D.

A-LM3 and B-LM3 do nothing because the significations have already been established.

W04M pallet compares the state of the pallet word before executing LM3: signification vector and the state of the pallet word after executing LM3: signification vector. Here, they are different from each other, so that LM3: signification vector as a whole is executed again.

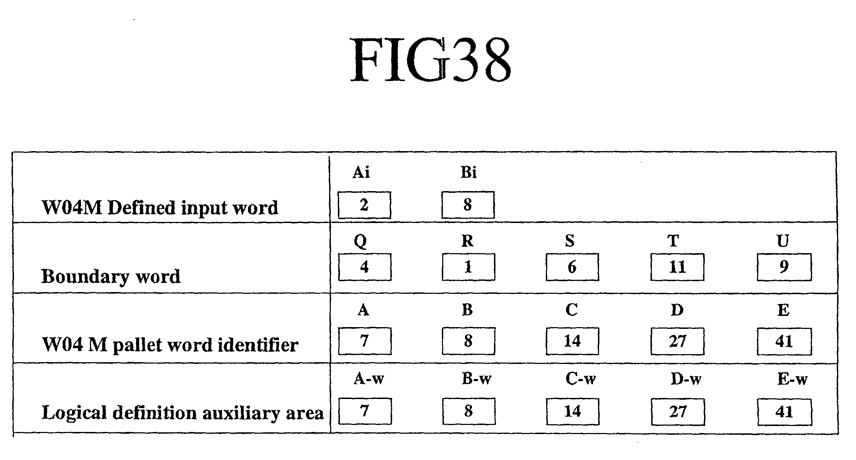

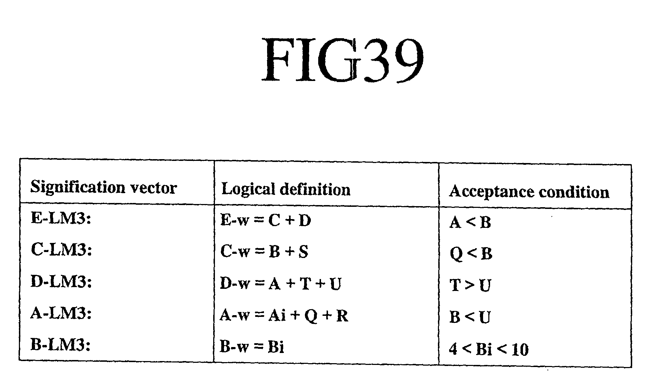

At the fourth-time execution, the state becomes as shown in Fig. 38 and Fig. 39.

Here, with E-w, the signification is established to the given word, so that the signification = '41' is obtained. The acceptance condition is satisfied, so that the signification = '41' is established to E.

C-LM3, D-LM3, A-LM3 and B-LM3 do nothing because they have already established the significations.

W04M pallet compares the state of the pallet word before executing LM3: signification vector and the state of the pallet word after executing LM3: signification vector. Here, they are different from each other, so that LM3: signification vector as a whole is executed again.

At the fifth-time execution, E-LM3, C-LM3, D-LM3, A-LM3, and B-LM3 do nothing because they have already established the significations.

With the fifth execution, W04M pallet ends the restart, because a result of comparing the state of the pallet word before executing LM3: signification vector and the state of the pallet word after executing LM3: signification vector is the same.

### (Structural Principle 17)

When applying the base structure to computer process, the following is applied by being classified into three kinds, depending upon the defined output to be handled.

By allocating defined outputs targeted to the respective base structures (T0, T1, K0), the role of each base structure is limited to the relevant defined outputs.

By jointly activating the base structures (T0, T1, K0) whose roles are limited, various processing modes can be adopted.

Here, T0 is a base structure with a process related to an operation by a person. For example, if the target output is a screen, φ0 is T0's tense control function which activates each of T0's pallets and implements unit with T0, K0. T0W02 is T0's W02 tense control function and takes in screen word's content into the base structure.

T0W03 is T0's W03 tense control function and establishes the signification for screen word output.

T0W02i is a virtual pallet provided in T0W03 and handles screen words for input.

T0W04M is a virtual pallet provided in T0W03 and handles screen words for output and establishes a signification.

T0W04 is T0's W04 pallet which edits screen words and sets screen word's content into the screen.

Next, T1 is a base structure with a process not involving an operation by a person. If the target output is a database or a file, φ1 is TI's tense control function which activates each of T1's pallets and implements unit with T0, K0.

T1W02 is T1's W02 tense control function and takes in the defined input word's content into the base structure.

T1W03 is T1's W03 tense control function and establishes a signification to the defined output words.

T1W02i is a virtual pallet provided in T1W03 and handles the defined input words.

T1W04M is a virtual pallet provided in T1W03 and establishes a signification to the defined output words.

T1W04 is T1's W04 pallet which edits the defined output words and outputs a signification of the defined output words into the defined output.

K0 is a base structure establishing a signification to words which are non-defined words. If the target outputs are words which are non-defined words, φK is K0's tense control function and activates each of K0's pallets and implements unit with T0, T1.

K0W02 is K0's W02 pallet function with no fundamental working.

K0W03 is K0's W03 pallet function to establish a signification to K0 word.

K0W02i is a virtual pallet provided in K0W03 to handle K0 words as input.

K0W04M is a virtual pallet provided in K0W03 to establish a signification by handling K0 words as output.

T0W04 is K0's W04 pallet which edits K0 words and outputs K0 word's content into T0W04M, T1W04M.

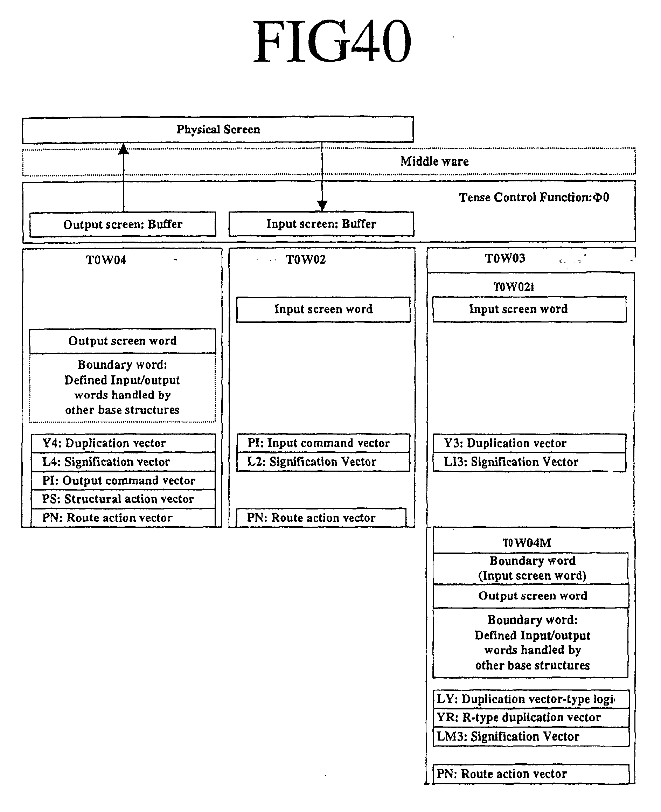

Next, Fig. 40 is an arrangement diagram of "T0: base structure with a process involving an operation by a person and three kinds of pallets" and "a pallet word, a boundary word, and a synchronous vector". The relationship with a screen which becomes a physical medium will be described with reference to Fig. 40.

(1) The pallet self word handled by each pallet is treated as a screen word.

(2) Data input/output with a physical screen is implemented by the tense control function through a middleware prepared by a relevant computer.

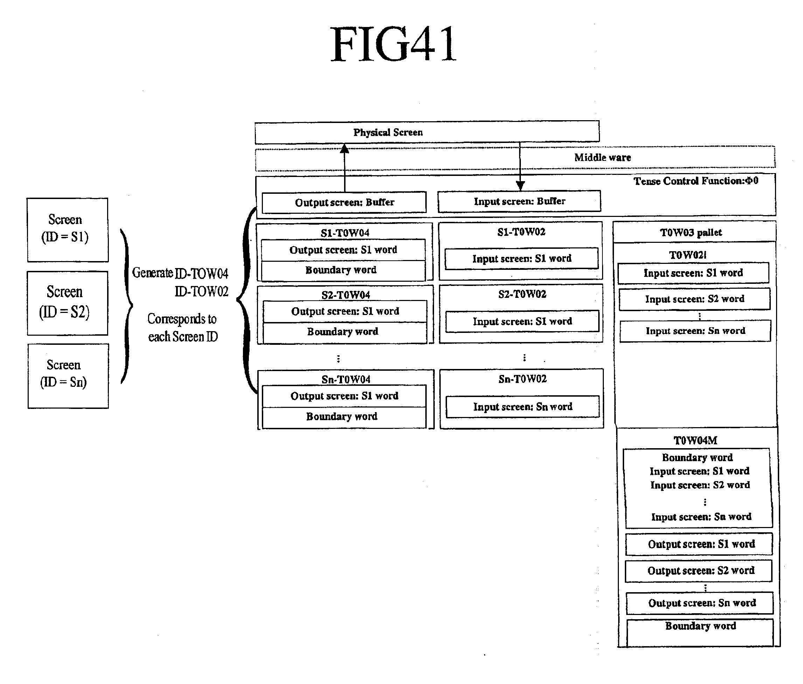

Next, "how to provide three kinds of pallets (T0W02, T0W02, T0W04) in T0: base structure with a process involving an operation by a person" will be described with reference to Fig. 41.

First, (1) for one screen, two kinds of pallets, T0W04 and T0W02, are provided in a pair. When a plurality of screens exist, the pairs of the two kinds of pallets, T0W04 and T0W02, are provided for the same number of pairs as the number of the screens.

(2) One piece of T0W03 is provided. The whole of T0: base structure upon handling the plurality of screens is shown in Fig. 41. Two kinds of pallets corresponding to one screen are expressed by the screen ID-the kind of pallet with respect to the screen ID. In Fig. 41, the description of the synchronous vectors placed in each pallet is omitted.

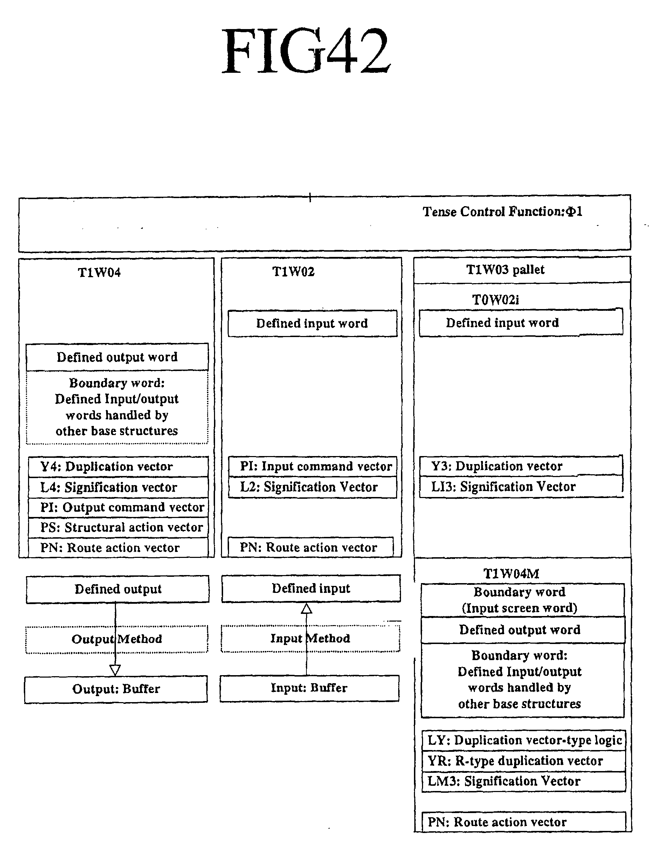

Next, Fig. 42 is an arrangement diagram of "T1: base structure with a process not involving an operation by a person and three kinds of pallets", "a pallet word, a boundary word, and a synchronous vector". The relationship with a database, a file, and a communication message which become physical media will be described by using Fig. 42.

(1) The pallet self word handled by each pallet is treated as a database, a file, and a communication message word. For description, it is expressed by the defined input and the defined output.

(2) The input and output of the data with the physical defined input and defined output is performed through an input method and an output method provided by a relevant computer, in which an input vector inputs the defined input in T1W02 and an output vector outputs the defined output in T1W04.

(3) T1: base structure with aprocess not involving an operation by a person is provided by one to handle all defined inputs and defined outputs. T1W02 inputs a plurality of defined inputs and T1W04 handles a plurality of defined outputs.

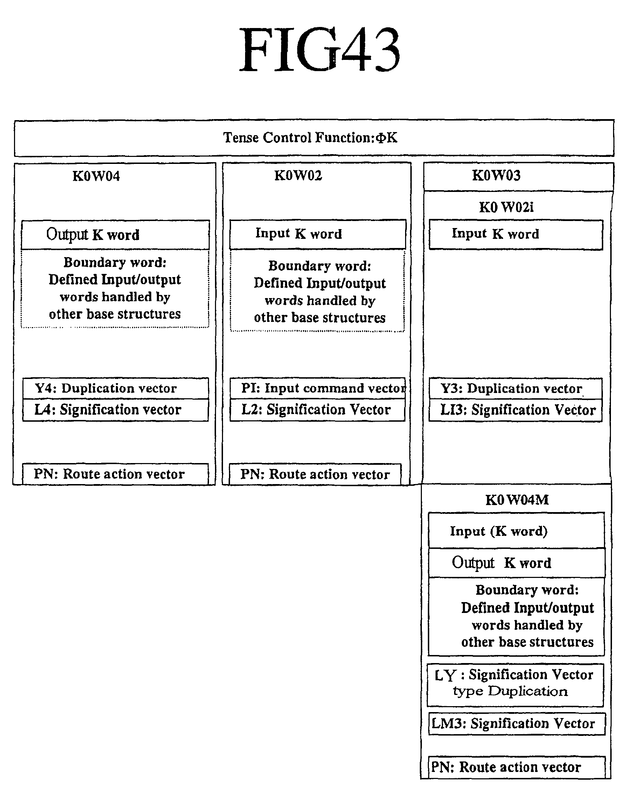

Next, a description will be made of an arrangement diagram of "K0: base structure establishing a signification to words which are non-defined words and three kinds of pallets" and "a pallet word, a boundary word, and a synchronous vector" with reference to Fig. 43.

(1) When words which are non-defined input/output words are provided, K0 is provided as a base structure to establish a signification to non-defined words.

(2) The pallet self word handled by each pallet of K0 is treated as a non-defined word. For description, it is expressed as "K word".

(3) Non-defined words cannot become the target defined output word when a computer implements information processing. Thus, an output action vector is not provided. To hand over the signification of K word to (T0 or T1), YR: R-type duplication vector of (T0 or T1) duplicates the signification of output K word existing in K0W04 into the self's (T0 or T1) boundary word inside W04M pallet.

(4) No output action vector is provided to K0, so that no structural action vector is provided.

At the point of time when W03 pallet of (T0 or T1) which requests the base structure link with K0 ends, K0 tense control function empties the pallet word data area of each pallet of K0 after obtaining the end instruction from the tense control function of (T0 or T1).

### (Structural Principle 18)

Structural Principle 18 relates to a "process route diagram".

The process route diagram is regulated as a method to describe the order of activating pallets, the order of activating the base structures, and how to realize the base structure link.

When T0: base structure treats a screen as a defined input/output:
(1) The tense control function always exists in the base structure unit, so that it is substituted by the process route diagram identifier. Thus, the description of the tense control function is omitted.
(2) As it is an implicit understanding that the pallet word, the boundary word, and the synchronous vector are included inside the pallet in accordance with the structural principle, the description of each pallet is omitted, thereby describing only pallet identifiers and input/output screen identifiers.
(3) As a pair of T0W04 pallet and T0W02 pallet is provided for one screen, for the plurality of screens, a plurality of pairs of T0W04 pallet and T0W02 pallet are provided, but T0W03 pallet is only one. In the order of T0W04 pallet, T0W02 pallet and T0W03 pallet, the three kinds of pallets are made into a pair and it is described as a base structure. T0W03 pallets are described in a plurality of places, but they are the same one.
(4) In case of the screen, a defined input and a defined output are on the same screen, so that the defined handled by the base structure is described as only one screen.
(5) When a pallet to be activated next to T0W03 pallet is T0W04 pallet, it is described by the counter-clockwise line.
(6) Among screen words provided on the screen, words to specify computer process are described on the process route diagram in order to easily recognize which word specifies what process.
(7) Routing action vectors are provided for the same number as the lines connecting pallets which are described on the process route diagram. The execute condition of routing action vector is whether screen words described on the line connecting pallets were input or not input. A line connecting pallets is described as a "process route".
(8) The screen change etc. are described in the form of the base structure link of the base structure described in the screen identifier unit. It is a base structure link in case of one piece of tense control function.

Here, a description will be made of the process route diagram of the base structure (identifier = B1) which handles the screen (identifier = S1) as an example.

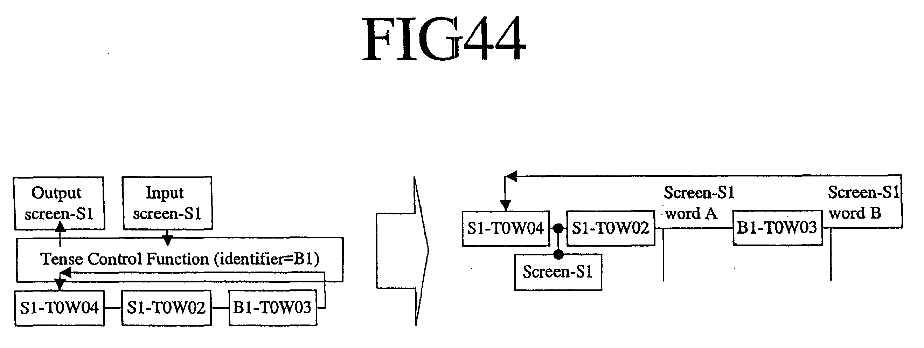

The base structure diagram (identifier = B1) is regarded as a process route diagram (identifier = B1), and the description is made as shown in Fig. 44.

Next, a description will be made of the process route diagram, when the base structure (identifier = B1) which handles two screens (identifiers = S1, S2) implements the formation of the base structure link as an example.

Two base structures of a base structure of a screen (identifier = S1) and of a base structure of a screen (identifier = S2) are connected by taking T0W03 pallet as the starting point and described.

One tense control function activates all pallets in order in accordance with the instruction of routing action vectors.

Even if there are one tense control function and one T0W03, (T0W04, T0W02, T0W03) are handled as the base structures . The order is as follows: after operating the screen (identifier = S1), the screen (identifier = S2) is handled.

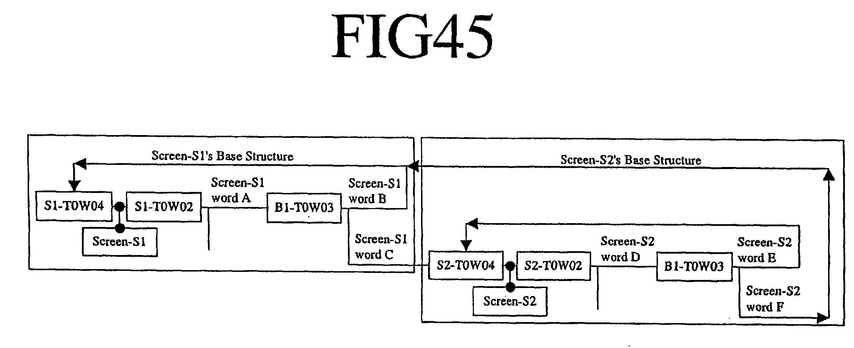

Fig. 45 shows which pallet is to be activated upon what word of each screen is input, thereby expressing an order activating a plurality of pallets, as well as an execute condition described to routing action vectors and a content of instructions to the tense control function.

The formation of the base structure link of "screen-S1's base structure" -> "screen-S2's base structure" is such that when the screen (S1) word C is input, B1-T0W03's pallet routing action vector specifies S2-T0W04 to the next pallet.

The formation of the base structure link of "screen-S2's base structure" -> "screen-S1's base structure" is such that when the screen (S2) word F is input, B1-T0W03's pallet routing action vector specifies S1-T0W04 to the next pallet.

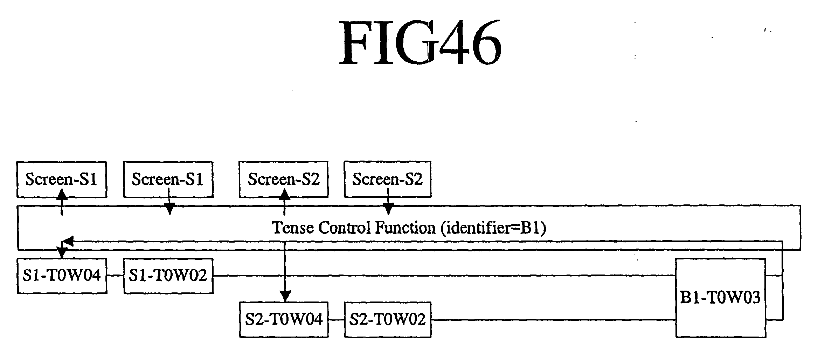

In the process route diagram of Fig. 46, the activating order of the pallets is described with respective to the base structure.

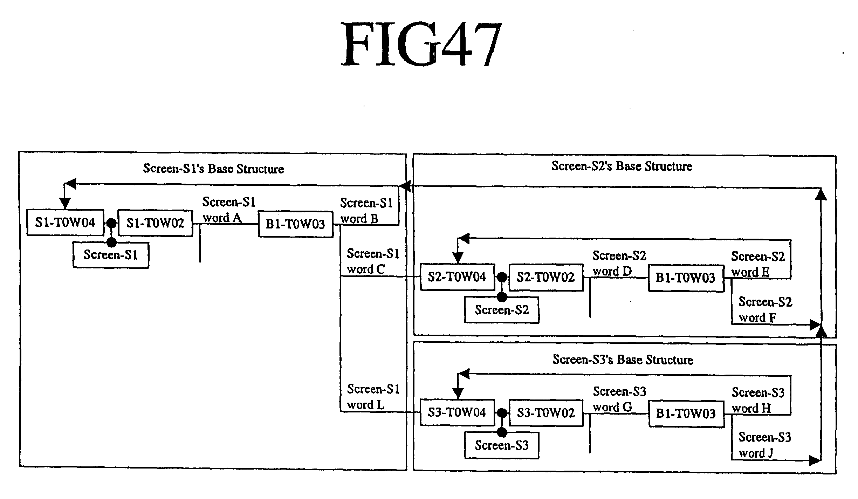

Fig. 47 is a process route diagram when the base structure (identifier = B1) which handles three screens (identifiers = S1, S2, S3) implements the formation of the base structure link.

In the case where the screen (identifier = S1) changes to either of the screen (identifier = S2) or the screen (identifier = S3) by selecting a screen to which it changes next, one base structure can realize the formation of the base structure link with a plurality of base structures.

In the base structure of a screen-S1, three routing action vectors of B1-T0W03 are provided in accordance with Fig. 47.

(1) Upon input of the screen (S1) word B, S1-T0W04 is specified as the next pallet.

(2) Upon input of the screen (S1) word C, S2-T0W04 is specified as the next pallet.

(3) Upon input of the screen (S1) word L, S3-T0W04 is specified as the next pallet.

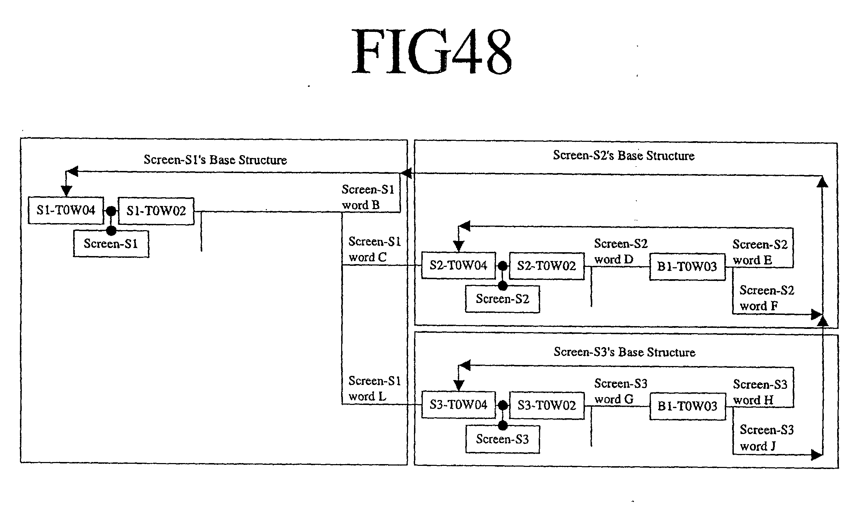

In Fig. 48, when the base structure (identifier = B1) implements the formation of the base structure link, it can change to another base structure's T0W04 pallet from T0W02 pallet if the establishment of the signification in T0W03 pallet in one base structure is not necessary. With the screen (identifier = S1) of an example shown in Fig. 47, when a change to other screen is determined simply by an input word, B1-T0W03 can be omitted with the screen (identifier = S1)'s base structure. A process route diagram becomes as follows.

When T1: base structure takes a database, a file, a communication media, etc. as a defined input/output:
(1) The tense control function always exists in a unit of the base structure, so that it is substituted by the process route diagram identifier and thus, the description of the tense control function is omitted;
(2) in each pallet, a pallet word, a boundary word and a synchronous vector are included inside the pallet as implicit understanding items in accordance with the structural principle and thus, their descriptions are omitted, thereby only describing pallet identifiers and defined input/outputs;
(3) T1W04 pallet and T1W02 pallet are provided such that one T1W02 pallet is provided for a plurality of defined inputs and one T1W04 pallet is provided for a plurality of defined outputs, and T1W03 pallet is only one;
(4) three kinds of pallets are made as a pair and described as the base structure in the order of T1W04 pallet, T1W02 pallet and T1W03 pallet;
(5) when a pallet activated next to T1W03 pallet is T1W04 pallet, it is described with a counter clockwise line; and
(6) a plurality of T1: base structures are connected taking T1W02 as the staring point.

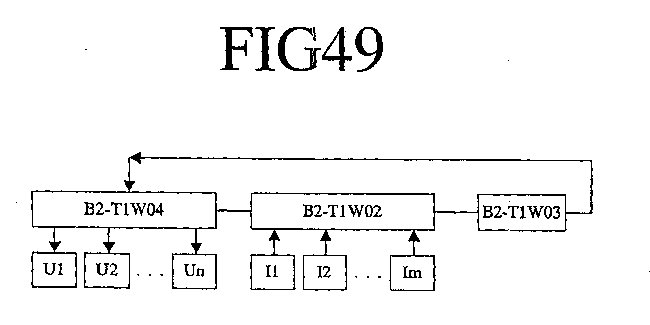

When, with the base structure (identifier = B2), there are n pieces of defined outputs (identifiers = U1, U2, ..., Un) and m pieces of defined inputs (identifiers = I1, I2, ..., Im), a process route diagram is described as shown in Fig. 49.

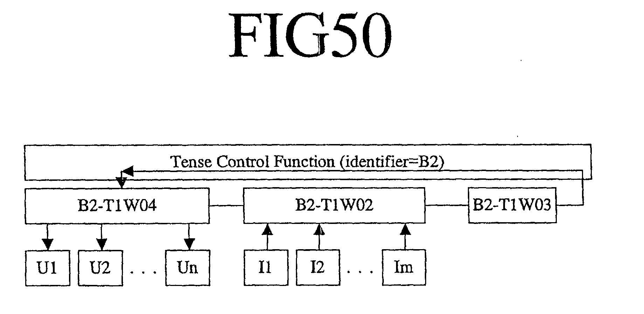

The process route diagram of Fig. 49 represents the base structure diagram of Fig. 50.

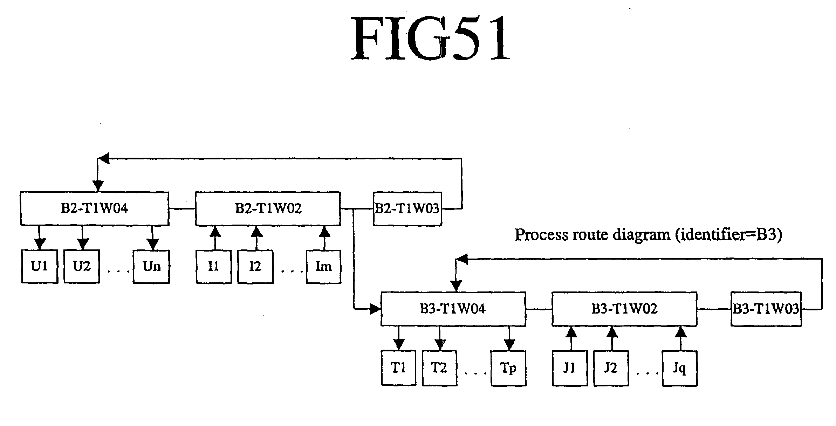

When output timings of the defined output shown in Fig. 51 are entirely different, they are classified for every defined output with different timing, and T1: base structure is provided for the same number classified.

It is a process route diagram of the formation of the base structure link, when outputting defined outputs of the base structure (identifier = B2): defined outputs (identifiers = U1, U2, ..., Un), defined inputs (identifiers = I1, I2, ..., Im) and then outputting defined outputs of the base structure (identifier = B3): defined outputs (identifiers T1, T2, ..., Tp), defined inputs (identifiers = J1, J2, ..., Jp).

B2-T1W02 pallet's routing action vector specifies the next tense control function (identifier = B3).

This case applies to when changing from the base structure (identifier = B2) to the base structure (identifier = B3) with no controls returning to the base structure (identifier = B2) any more.

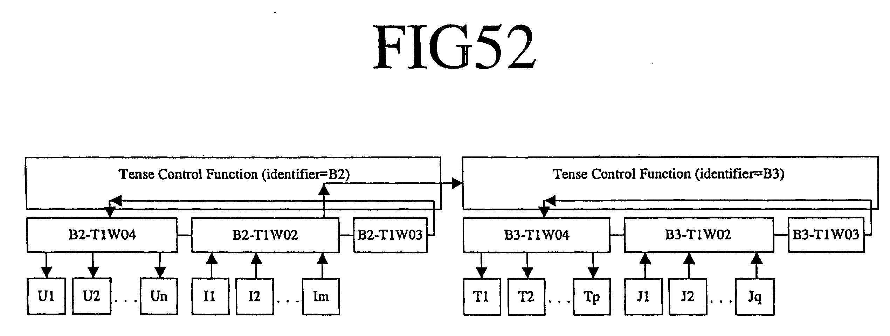

In the process route diagram of Fig. 51, the base structure links of Fig. 52 are described with the order of activating the base structures.

The base structure link of "T0: base structure taking a screen as defined input/output" and "Ti: base structure taking a database, a file, and communication media as defined inputs/outputs" will be described.

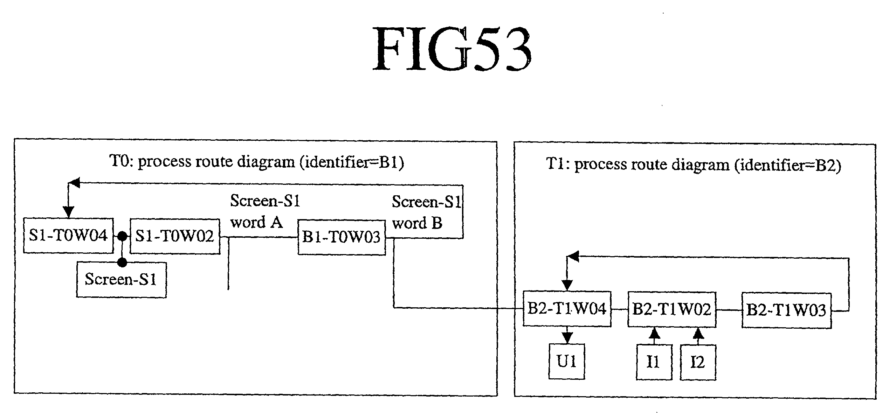

Fig. 53 shows the base structure link of T0: base structure (base structure identifier = B1, and input/output screen identifier = S1) and T1: base structure (base structure identifier = B2, input database identifiers = I1, I2, and output database identifier = U1). When T0 and T1 are activated on the same computer memory, in the case where a database (identifiers = I1, I2) is referenced with a screen (identifier = S1) and a database (identifier = U1) is output, "a process route diagram taking T0: screen as an input/output defined" and "a process route diagram taking T1: database or file as an input/output defined" are provided and connected.

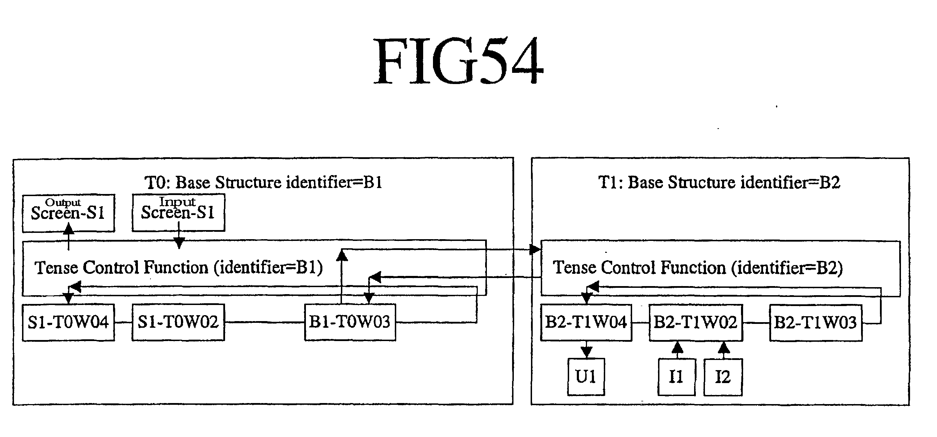

In the process route diagram of Fig. 53, the following base structure link shown in Fig. 54 is described.

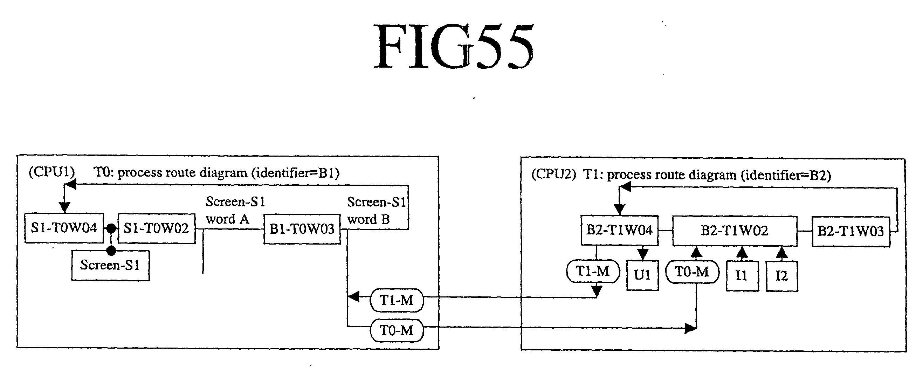

Fig. 55 is a process route diagram of the case where a computer (CPU1) activated by T0: base structure (base structure identifier = B1, and input/output screen identifier = S1) and a computer (CPU2) activated by T1: base structure (base structure identifier = B2, input database identifiers I1, I2, and output database identifier = U1) are different, for example, a case of a client-server mode.

The connection of "T0: process route diagram" and "T1: process route diagram" is implemented via communication messages.

T1: base structure receives communication messages (identifier = T0-M) output by T0: base structure.

T0: base structure receives communication messages (identifier = T1-M) output by T1: base structure.

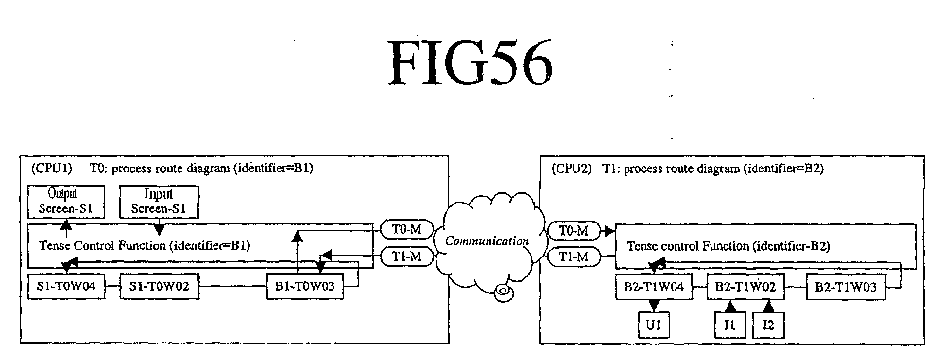

In the process route diagram of Fig. 55, the base structure link shown in Fig. 56 is described by clarifying pallets that receive a communication message as a defined input or send a communication message as a defined output. The output/input of a physical communication message is implemented by the tense control function.

As described above, the effects of the process route diagram include the following.

(1) The base structure may be provided in accordance with rules of providing a base structure, based on the defined input/output of the base structure.

(2) The formation of the base structure link may be realized by the connection based on the order of activating base structures.

As a result of these, a controlling structure of information process for obtaining the defined output can be expressed by the base structure and the base structure link, irrespective of the form of the desired defined output or the complex information process.

The process route shows the following with clarified description.

(1) To clarify three kinds of pallet identifiers and indicate the order of activating specified pallets.

(2) To clarify a plurality of base structure's identifiers and indicate the order of the base structure link formation.

Further, the process route diagram also indicates the following. That is, firstly, the base structure's vectors are provided in accordance with the base structure arrangement diagram. Secondly, synchronous vectors obey the processing scheme of the synchronous vector. With the above as an implicit understanding,

(3) the description of base structure's defined input/output means to provide defined input/output word into three kinds of pallets as a pallet word.

(4) the description means to provide an input/output synchronous vector for defined input/output, a synchronous vector for the defined input/output word and a structural action vector.

(5) the description means to describe an input/output command different per defined input/output and contents of the tense control vector different per word in accordance with the processing scheme of the synchronous vector.

Therefore, the process route diagram is the specifications for creating a program in the base structure.

When viewed reversibly, the information processing specifications to obtain the desired defined output may be created only for a layout of the defined inputs/outputs, a list of defined input/output words, and a process route diagram, with respect to any defined output desired for information processing, however complex the information processing is.

That is, input/output commands different per defined input/output are indicated with an arrow on the process route diagram. Contents of the tense control vector different per word are development requirement and the contents of a program as well. From this reason, it is possible that the contents of the tense control vector different per word are not made into document but into a direct program description.

### (Structural Principle 19)

Structural Principle 19 relates to a synchronous range.

The range of word establishing a signification means all words of the defined output to be output until the output of the last defined output.

The maximum range of word establishing a signification simultaneously when the synchronous structure is executed is called "synchronous range".

The minimum synchronous range is all words existing in one defined output.

(1) The synchronous range can be recognized by "link" and "branch" to execute the base structure link in a described process route diagram.

(2) The synchronous range becomes a minimum unit for mounting a synchronous-structure program on a computer. A unit to provide T0 tense control function, a unit to divide a W03 pallet, and T1 base structure are treated as a minimum unit. The synchronous range is a maximum range of word simultaneously establishing a signification, so it does not affect the formation of the signification of words existing in other synchronous range.

(3) The range of the given word referred to by the self word when describing logical definition is limited to the defined input words and defined output words existing in the synchronous range, even if there are many words. At the point of time of executing logical definition of the self words, words existing in other synchronous range never establishes a signification. So, it is useless even if they are referred to as the given words.

When executing the synchronous structure, "a range outputting the defined output practically" in the "synchronous range" is called "the upon-execute synchronous range".

When the synchronous range is executed, words to establish a signification are limited to words of the defined output of the base structure to be executed and words of the defined output of the base structure executed before the currently executed base structure.

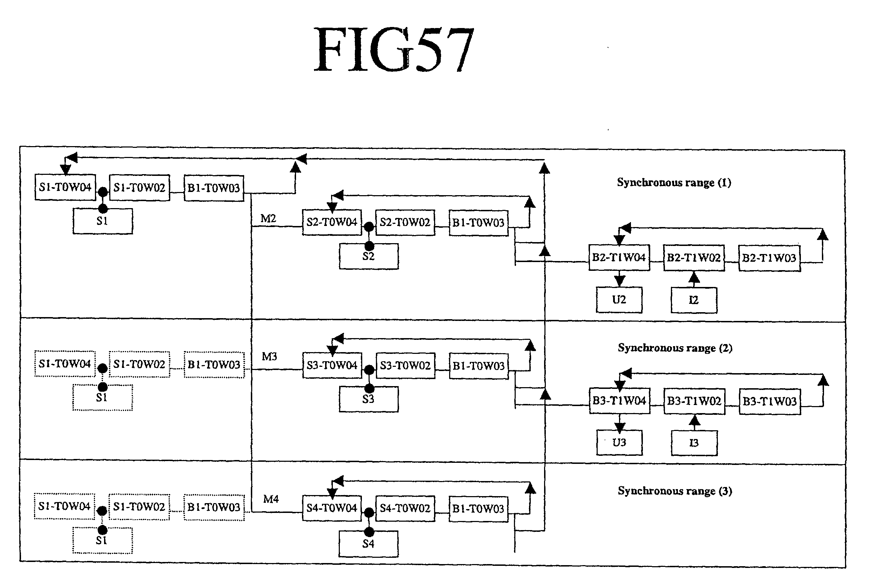

Next, the synchronous range is explained by using a process route diagram of Fig. 57.

In this case, T0 process route diagram is assumed to be (identifier = B1).

A menu screen is assumed to be (identifier = S1) and an in-menu screen-select menu is assumed to be (Identifiers = M2, M3, M4). A screen corresponding to a menu (identifier = M2) is assumed to be (identifier = S2). With a screen (identifier = S2), it is assumed to implement the base structure link formation of T1 process route diagram (identifier = B2): input database (identifier = I2) and out database (identifier = U2).

A screen corresponding to a menu (identifier = M3) is assumed to be (identifier = S3). With a screen (identifier = S3), it is assumed to implement the base structure link formation of T1 process route diagram (identifier = B3) input database (identifier = I3) and out database (identifier = U3).

A screen corresponding to a menu (identifier = M4) is assumed to be (identifier = S4).

It is assumed that screens (identifiers = S2, S3, S4) will change to other screen respectively with menu-select after they return to menu screen respectively. A process route diagram at this time becomes as shown in Fig. 57.

"S1" (surrounded by the broken line in the drawing) is not actually described in the process route diagram in the sense that "the result upon execution becomes as shown by the diagram'.

In the process route diagram of Fig. 57, when a person performs a screen operation, upon selecting (identifier = M2) by viewing menu screen (identifier = S1), the screen changes to screen (identifier = S2), and the base structure link with T1 (identifier = B2) in implemented upon having operated screen (identifier = S2). Further, the screen changes to screen (identifier = S3) upon selecting (identifier = M3) and the base structure link with T1 (identifier = B3) is implemented upon having operated screen (identifier = S3). Then , the screen changes to screen (identifier = S4) upon selecting (identifier = M4).

Here, a change to screen (identifiers = S3, S4) never occurs after having operated screen (identifier = S2) and the screen always returns to screen (identifier = S1).

When a signification is established to the words of the defined output (identifier = U2) of screen (identifiers = S1, S2) and T1 (identifier = B2), a signification is never established to other defined words.

Likewise, a change to screen (identifiers = S2, S4) never occurs after having operated screen (identifier = S3) and the screen always returns to screen (identifier = S1).

When the signification was established to words of the defined output (identifier = U3) of screen (identifiers = S1, S3) and T1 (identifier = B3), a signification is never established to other defined words.

Likewise, a change to screen (identifiers = S2, S3) never occurs after having operated screen (identifier = S4) and the screen always returns to screen (identifier = S1).

When a signification is established to words of screen (identifier = S4), a signification is never established to other defined words.

Although it is up to the operation by a person as to how the execution is implemented when actually executing it, regardless of how the synchronous structure is executed, the maximum range recognizable clearly of the range of words simultaneously establishing a signification is defined as "synchronous range".

In the process route diagram of Fig. 57, there are three synchronous ranges.

(1) A range of screen (identifier = S1)'s base structure, screen (identifier = S2)'s base structure and T1 (identifier = B2)'s base structure.

(2) A range of screen (identifier = S1)'s base structure, screen (identifier = S3)'s base structure and T1 (identifier = B3)'s base structure.

(3) A range of screen (identifier = S1)'s base structure and screen (identifier = S4)'s base structure.

When the synchronous structure is executed, a 'range actually outputting the defined output word' in the 'synchronous range' is called 'upon-execute synchronous range'.

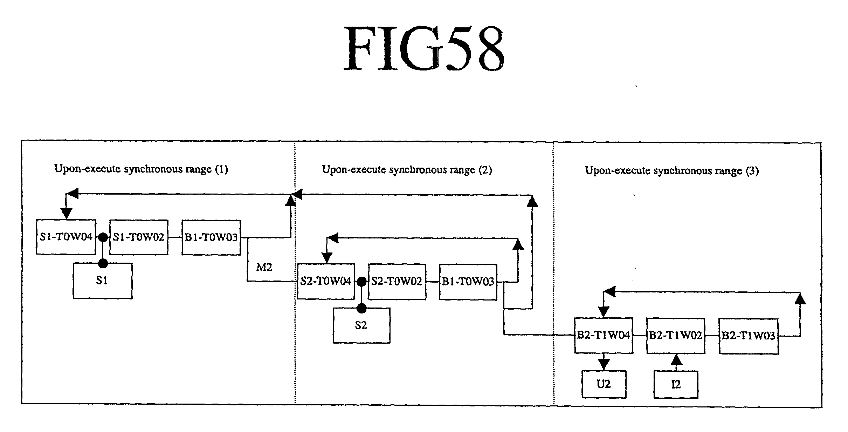

A description will be made with reference to the synchronous range of Fig. 58.

At the time of outputting screen (identifier = S1), a signification has been established to words of screen (identifier = S1). At this time, inside the B1-T0W03, the tense control vector of other words is also executed. Therefore, it is possible that a signification has been established to other words. However, there is no guaranty that a signification has been established to other words, because there is no guaranty that a signification has been established to the given words to be referenced upon self-generation of other words.

The screen (identifier = S1) is displayed after S1-T0W04 is executed. As aresult of operating screen (identifier = S1), S1-T0W02, B1-T0W03, and S1-T0W04 are executed in this order. Then, the screen (identifier = S1) is displayed again. When the synchronous structure is executed by selecting (identifier = M2), S1-T0W02, B1-T0W03, and S2-T0W04 are executed in this order. Then, the screen (identifier = S2) is displayed.

When the synchronous structure is executed by operating (identifier = S2), S2-T0W02, B1-T0W03 are executed, and the base structure link formation is implemented with T1 (identifier = B2) in B1-T0W03.

With T1 (identifier = B2), defined input (identifier = I2) is output. So, words of screen (identifier = S2) will establish a signification by referencing the signification of the defined input (identifier = I2), with self-generation. S2-T0W04 is executed and screen (identifier = S2) is displayed.

At this point, a signification has been established to words of screen (identifier = S1) and screen (identifier = S2). A signification of words of the T1 (identifier = B2)'s defined output (identifier = U2) has not been established yet. Among words of screen (Identifier = S2), a person enters necessary words, and when the synchronous structure is executed, S2-T0W02, B1-T0W03 are executed and implements the formation of the base structure link with Ti (identifier = B2) inside B1-T0W03.

With T1 (identifier = B2), in the self-generation of the defined output (identifier = U2)'s words, words of screen (identifier = S2) are referenced as given words and a signification is established to the defined output (identifier = U2)'s words. With B2-T1W04, the signification of the defined output (identifier = B2) is output.

Next, S2-T0W04 is executed and the screen (identifier = S2) is displayed.

At this point, the synchronous structure has output a signification to all defined outputs existing in the synchronous range.

As described above, when the synchronous structure is executed, words to establish a signification are limited to words the defined output of the base structure to be executed and words of the defined output of the base structure executed before the currently-executed base structure.

Also, the order of executing base structures has been determined statistically. So, in the upon-execute synchronous range, it is possible to recognize how many base structures have already been executed by means of recognizing the currently-executed base structure.

### (Structural Principle 20)

Structural Principle 20 relates to "synchronization" and "destruction of synchronization".

An idea residing in the root of "synchronous structure" is "providence of existence". Because of the 'emptiness', the "signification" can be established from the "relationship" which works on the providence of "existence".

The synchronous structure always begins from the "emptiness" and returns to the "emptiness" after outputting the established "signification" to the defined output.

The synchronous structure is what shapes the mechanism with which a "signification" is established.

The "synchronization" means "a state that a signification has been established" versus the "emptiness".

The "destruction of synchronization" means "a state of having returned again to the emptiness after outputting the established signification to the defined output", that is, a return to the preparatory state to establish a signification again.

The "existence" can be established from the "relationship" which works on "the force to materialize existence". With the synchronous structure, "existence" is referred as "signification".

A relationship between an existence cause "F" and an object "N" that comes into existence as a result of the existence cause is described as "F -> N". The existence cause "F" is a "cause" and the object "N" that comes to exist is a "result". The object "N" does not always exist. The object "N" exists only when the existence cause "F" is satisfied. If the object "N" already exists, since two objects "N"s do not exist, even if the existence cause "F" has been satisfied, a new existence is not established to the object "N".

If the object "N" does not exist yet, an existence is established to the object "N" by the relationship "F -> N" once the existence cause "F" is satisfied.

Since no existence is present yet, "the force to materialize existence" works and existence is brought out. Note that "the force to materialize existence" is phased as "providence of existence". "The force to materialize existence" is not a relationship. With whatever relationship, existence can be brought out first through the functioning of relationship. Therefore, "the working force of relationship" is necessary. "The working force of relationship" is "the force to materialize existence".

The signification vector is a concrete form of the unit, and the unit is a concrete form of the relationship "F -> N".

The "logical definition" and "acceptance condition" correspond to the existence cause "F". The "word identifier's data area" corresponds to Object "N". When the synchronous structure is executed, if a signification does not exist yet to the "word identifier's data area" , a signification is established to the "word identifier's data area" via the relationship "logical definition/acceptance condition -> word identifier's data area", once the "logical definition" and "acceptance condition" are satisfied.

The "emptiness" is the base of the signification existence.

The "emptiness" itself does not exist. It indicates a state in which a signification does not exist yet to what is made an object. Since the word identifier's data area to become an object is still empty (i.e., a state in which a signification does not exist yet), a signification comes to exist to the word identifier's data area via the relationship "logical definition/acceptance condition -> R word identifier's data area". Therefore, the "emptiness" may as well said to be "the nothingness waiting the advent of existence (signification) ".

### Industrial Applicability

According to the present invention, by logically developing the computer program through the synchronous structure, it has recursive property and is capable of avoiding human errors, and the program itself has a simple and precise structure, so that the system is robust upon being executed.

## Claims

1. A processing method utilizing a synchronous structure with use of an information processor, in which development of a program is processed using the information processor by being applied to a synchronous structure comprising two or more synchronous vectors developed on a memory area of the information processor, wherein said synchronous structure:
acquires a defined input through an external interface;
references a content of a word constituting the defined input; and
establishes a signification to a predetermined word to output the word to a defined output.

2. A processing method utilizing a synchronous structure with use of an information processor according to claim 1, wherein said defined input and said defined output are access units when the information processor inputs data from a physical storage medium or outputs data into the physical storage medium.

3. A processing method utilizing a synchronous structure with use of an information processor according to claim 1, wherein said signification is a state in which some value exists in a predetermined data area set in said memory area, and said word is a unit data for acknowledging a presence of the signification.

4. A processing method utilizing a synchronous structure with use of an information processor according to claim 1, wherein in said synchronous structure, the signification establishment of the word consists of a logical definition which causes a value to exist in a predetermined variable and an acceptance condition which judges whether an existing value that is a result of executing the logical definition is accepted or not.

5. A processing method utilizing a synchronous structure with use of an information processor according to claim 4, wherein said logical definition is defined by a relational expression between a self word which brings out a value and a given word referenced to by the self word.

6. A processing method utilizing a synchronous structure with use of an information processor according to claim 4, wherein said logical definition is executed under a condition that the signification does not exist.

7. A processing method utilizing a synchronous structure with use of an information processor according to claim 5, wherein referencing of said self word to the signification of the given word substitutes a logic up to establishing the signification to the given word.

8. A processing method utilizing a synchronous structure by use of an information processor according to claim 1, wherein the mutually independent synchronous vectors are executed a plurality of times.
